**Europäisches Patentamt**

**European Patent Office**

**Office européen des brevets**

(19)

(11) Veröffentlichungsnummer: **0 290 581 B1**

# (12) EUROPÄISCHE PATENTSCHRIFT

(45) Veröffentlichungstag der Patentschrift:
21.08.91 Patentblatt 91/34

(51) Int. Cl.⁵: **H04B 1/66**

(21) Anmeldenummer: **88900016.2**

(22) Anmeldetag: **20.11.87**

(86) Internationale Anmeldenummer:
**PCT/EP87/00723**

(87) Internationale Veröffentlichungsnummer:
**WO 88/04117 02.06.88 Gazette 88/12**

(54) **VERFAHREN ZUM ÜBERTRAGEN DIGITALISIERTER TONSIGNALE.**

(30) Priorität: **21.11.86 DE 3639753**

(43) Veröffentlichungstag der Anmeldung:
**17.11.88 Patentblatt 88/46**

(45) Bekanntmachung des Hinweises auf die
Patenterteilung:
**21.08.91 Patentblatt 91/34**

(84) Benannte Vertragsstaaten:
**AT BE CH DE FR GB IT LI LU NL SE**

(56) Entgegenhaltungen:
**EP-A- 0 064 119**
**DE-C- 3 440 613**
**Rundfunktechnische Mitteilungen, vol. 30, no. 3, May-June 1986, (Hamburg, DE), D. Krahe: "Ein Verfahren zur Datenreduktion bei digitalen Audiosignalen unter Ausnutzung psychoakustischer Phänomene", pages 117-123**

(56) Entgegenhaltungen:
**IEEE Transactions on Communications, vol. COM-33, No. 10, October 1985, IEEE, (New York, US), K.Y. Kou et al., "Digital speech interpolation for variable rate coders with application to subband coding", pages 1100-1108**

(73) Patentinhaber: **BAYERISCHE RUNDFUNKWERBUNG**
**Arnulfstrasse 42**
**W-8000 München 2 (DE)**

(72) Erfinder: **THEILE, Günther**
**Hauptstrasse 26 A**
**W-8191 Thanning (DE)**
Erfinder: **STOLL, Gerhard**
**Ahornweg 21**
**W-8051 Zolling (DE)**
Erfinder: **LINK, Martin**
**Unter der Linde 7**
**W-8000 München 45 (DE)**

(74) Vertreter: **Konle, Tilmar, Dipl.-Ing.**
**Benderstrasse 23 a**
**W-8000 München 60 (DE)**

EP 0 290 581 B1

## Beschreibung

Die Erfindung bezieht sich auf ein Verfahren gemäß dem Oberbegriff des Anspruchs 1.

Bei der Übertragung digitaler Tonsignale ist es bekannt ("Journal of the Audio Engineering Society", Nov. 1979, Bd. 27, Nr. 11, S. 855-865 ; "The Bell System Technical Journal", Sept. 1981, S. 1633-1653 ; "IEEE International Conference on ASSP, 1982, Proceedings, S. 1684-1687), das breitbandige digitale Tonsignal mittels einer QMF-(Quadrature-Mirror-Filter) Filterbank in eine Anzahl von Teilbandsignalen entsprechend einer linearen Quantisierung zu unterteilen und die resultierenden Teilbandsignale beispielsweise mittels adaptiver PCM- oder DPCM-Codierung einer Datenreduktion zu unterziehen.

Es ist ferner aus der DE-C-3440613 bekannt, innerhalb jedes Teilbandsignales die Quantisierung der Nutzinformation so zu wählen, daß das Quantisierungsrauschen durch die Nutzinformation in demselben Teilband gerade verdeckt ist, wodurch sich ebenfalls eine Datenreduktion erzielen läßt. Der mit dem bekannten Verfahren erreichbare Datenreduktionsfaktor hat etwa den Wert vier, d.h., der Informationsfluß eines hochwertigen digitalen Tonsignals reduziert sich von etwa 500 Kbit/s auf etwa 125 Kbit/s, ohne subjektive Beeinträchtigung der Qualität.

Zur Erzielung einer noch weitergehenden Datenreduktion ist es ferner bekannt (EP-A-193143, DE-A-3506912 sowie "Rundfunktechnische Mitteilungen", Bd. 30 (1986), Heft 3, S. 117-123), eine Spektralanalyse des breitbandigen Tonsignals mit Hilfe einer diskreten Fourier-Transformation (beispielsweise durch Fast-Fourier-Transformation) durchzuführen und bestimmte, innerhalb verschiedener Frequenzgruppen relevante Spektralwerte nach Betrag und Phase so zu codieren, daß unter Berücksichtigung der durch Mithörschwellen beschriebenen Verdeckungseigenschaften des menschlichen Gehörs und gemäß unterschiedlicher Qualitätskriterien eine höhere Datenreduktion erreicht wird.

Das für die Fourier-Transformation erforderliche Analyse-Zeitfenster beträgt indessen etwa 25 ms. Dieser Wert stellt einen Kompromiß dar, um einerseits dem spektralen Auflösungsvermögen und andererseits dem zeitlichen Auflösungsvermögen des menschlichen Gehörs gerecht zu werden. Die mit diesem Analyse-Zeitfenster erreichbare spektrale Auflösung beträgt lediglich 40 Hz, so daß im Bereich tiefer Frequenzen, wo die Frequenzgruppenbreite des Gehörs etwa 100 Hz umfaßt, nur zwei Spektralwerte übertragen werden können. Die dabei entstehenden Seitenbänder liegen deshalb in den benachbarten Frequenzgruppen, so daß wahrnehmbare Qualitätsbeeinträchtigungen nicht auszuschließen sind. Andererseits ist das kompromißweise gewählte 25 ms-Analyse-Zeitfenster für das zeitliche Auflösungsvermögen des Gehörs zu lang. Da bei impulshaltigen Nutzsignalen diese Ungenauigkeit im Zeitbereich zu wahrnehmbaren Verzerrungen führt, muß zur Verzerrungsverminderung eine Anhebung der Amplitudenwerte der zeitlich vorausgehenden Spektralanteile durchgeführt werden, was jedoch nicht in allen Fällen zum gewünschten Erfolg führt. Ferner dürfen in der digitalen Tonstudiotechnik Blocklängen von etwa 5 ms nicht überschritten werden, um beim Schneiden von digitalisierten Tonsignalen unhörbare Schnitte zu ermöglichen. Hinzu kommt ferner, daß der Prozessoraufwand insbesondere im Empfänger zur Rücktransformation der sendeseitig transformierten Signale im Bereich hoher Frequenzen unnötig hoch ist, da die Berücksichtigung psychoakustischer Krieterien nur frequenzgruppenweise erfolgt.

Desweiteren ist bei dem zuletzt betrachteten bekannten Verfahren für die empfangsseitige Rückgewinnung der Spektralwerte nach Betrag und Phase sowie für die empfangsseitige inverse Fourier-Transformation die Übertragung von Nebeninformationen erforderlich.Diese Nebeninformationen stellen einen relativ hohen Anteil des gesamten Netto- Informationsflusses dar und erfordern einen besonders wirksamen Fehlerschutz, welcher den Informationsfluß des zu übertragenden, codierten Signals entsprechend erhöht. Schließlich ist bei dem bekannten Verfahren das quellencodierte Signal empfindlich gegenüber Bitfehler-Störungen, weil sowohl Betrag als auch Phase jedes Spektralwertes blockweise, d.h., nur etwa alle 25 ms übertragen werden, so daß ein Bitfehler ein Störspektrum innerhalb dieses Zeitintervalls erzeugt. Die Störwirkung eines 25 ms-Impulses ist wesentlich höher als beispielsweise diejenige eines 1 ms-Impulses, welche sich bei den eingangs erwähnten, bekannten Teilband-Verfahren für die fehlerhafte Übertragung eines Teilband-Abtastwertes ergibt.

Die Aufgabe der Erfindung besteht demgegenüber darin, unter Vermeidung einer Fourier-Transformation mit einem Verfahren der eingangs erwähnten Art die Verdeckungseigenschaften des menschlichen Gehörs vollständig zu nutzen, dahingehend, daß ein begrenzter Gesamtinformationsfluß qualitätsoptimal auf die Spektralanteile des Nutzsignals dynamisch verteilt wird, ohne einen hohen Aufwand hinsichtlich der Übertragung von Nebeninformationen, des Fehlerschutzes oder der empfangsseitigen Signalverarbeitung in Kauf nehmen zu müssen.

Diese Aufgabe wird erfindungsgemäß durch die kennzeichnenden Merkmale des Anspruchs 1 gelöst.

Vorteilhafte Ausgestaltungen und Weiterbildungen des erfindungsgemäßen Verfahrens ergeben sich aus den Unteransprüchen.

Die Erfindung beruht auf der Überlegung, daß sowohl die gegenseitige Verdeckung der Spektralanteile des Nutzsignals als auch die Verdeckung des Quantisierungsrauschens nicht nur innerhalb der jeweiligen Teilbänder, sondern über mehrere, benachbarte Teilbänder hinweg erfolgt. Um die Verdeckung vollständig zu nutzen, müssen die Quantisierungen von Teilbandsignalen nach Maßgabe der aus verschiedenen Spektralanteilen des Nutzsignals resultierenden Mithörschwelle gesteuert werden. Die Berechnung der dazu erforderlichen Steuerinformationen geschieht signalabhängig unter Berücksichtigung der Vor-, Simultan- und Nachverdeckung des menschlichen Gehörs. Da einerseits der erforderliche Gesamtinformationsfluß eines derartig codierten Tonsignales signalabhängig schwankt und wenn andererseits für den Anwendungsfall der Übertragung der Informationsfluß des übertragenen codierten Tonsignals konstant gehalten werden soll, kann die daraus resultierende, signalabhängige Informationsfluß-Reserve sendeseitig unter Berücksichtigung zusätzlicher Kriterien verwendet werden. Insbesondere kann die signalabhängige Informationsfluß-Reserve ganz oder teilweise für die Quantisierung der Teilbandsignale zur Verfügung gestellt werden, so daß sich die Abstände der Quantisierungsrauschpegel der Teilbandsignale zu der resultierenden Mithörschwelle vergrößern. Sie kann ferner ganz oder teilweise für den Fehlerschutz der im Multiplexbetrieb übertragenen, codierten Teilbandsignale sowie für den Fehlerschutz eines Multiplexrahmens zur Verfügung gestellt werden, so daß sich der Fehlerschutzgrad des Multiplexsignals erhöht.

Die Erfindung wird nachstehend anhand der Zeichnungen näher erläutert. Es zeigt :

| | |
|---|---|
| Fign. 1a und 2a | Blockschaltbilder der sendeseitigen und empfangsseitigen Schaltungsteile zur Durchführung des erfindungsgemäßen Verfahrens gemäß einer ersten Ausführungsform ; |
| Fign. 1b und 2b | Blockschaltbilder wie in Fign. 1a und 2a gemäß einer zweiten Ausführungsform ; |
| Fign. 1c und 2c | Blockschaltbilder wie in Fign. 1b und 2b gemäß einer dritten Ausführungsform ; |
| Fign. 1d und 2d | Blockschaltbilder wie in Fign. 1c und 2c gemäß einer vierten Ausführungsform, mit zusätzlicher Spektral-Analyse (FFT) sendeseitig ; |
| Fig. 1e | Blockschaltbild zur Durchführung einer stufenweisen Datenreduktion gemäß der ersten Ausführungsform des erfindungsgemäßen Verfahrens |
| Fig. 3 | ein Blockschaltbild für die in den Fign. 1a, 1b und 2a vorgesehene Stufe zur dynamischen Verteilung des Informationsflusses ; |
| Fig. 4 | Beispiele von drei verschiedenen Mithörschwellenkurven, welche sich in der Frequenzlage des maskierenden Tonsignals unterscheiden ; |
| Fig. 5 | die Abhängigkeit der mittleren Mithörschwellenkurve gemäß Fig. 4 von fünf unterschiedlichen Pegeln des maskierenden Tonsignals ; |
| Fig. 6 | ein Frequenzdiagramm, in welchem für den Vokal $/ \partial /$ die Harmonischen als Punkte sowie die daraus resultierende Mithörschwelle als durchgezogene Kurve aufgetragen sind ; |
| Fig. 7 | ein Zeitdiagramm für den zeitlichen Verlauf der Vor-, Simmultan- und Nachverdeckung des menschlichen Gehörs ; |
| Fig. 8 | ein Teilband-Frequenzschema eines Ausführungsbeispiels mit insgesamt 24 Teilbändern, wobei die Mithörschwellenkurven gemäß Fig. 4 eingetragen sind ; |
| Fig. 9 | Kurven gleicher Lautstärke von Schmalbandrauschen in Abhängigkeit von der Bandbreite ; |
| Fig. 10 | den strukturellen Aufbau der sendeund empfangsseitigen QMF-Filterbänke gemäß Fign. 1a und 2a bzw. 1b und 2b ; |
| Fig. 11 | ein Blockschaltbild der Transcodierungsstufe gemäß Fign. 1a und 1b ; |
| Fig. 12 | eine schematische Darstellung für die Bestimmung des Skalenfaktors für je acht Abtastwertes eines digitalisierten Tonsignals ; |
| Fig. 13 | eine schematische Darstellung ähnlich wie in Fig. 12, wobei jedoch nur jeder zweite Skalenfaktor für Übertragungszwecke verwendet wird und die nichtübertragenen Skalenfaktoren anhand von sog. Zuordnungsbits rekonstruiert werden, welche angeben, ob der betreffende, nicht-übertragene Skalenfaktor dem vorangehenden oder nachfolgenden, übertragenen Skalenfaktor zugeordnet ist. |
| Fig. 14 | Beispiel für den tonsignalabhängigen Zeitverlauf des für die Codierung erforderlichen Gesamtinformationsflusses ; |
| Fig. 15 | Beispiel für den tonsignalabhängigen Zeitverlauf des für die Codierung erforderlichen Gesamtinformationsflusses sowie der Informationsfluß-Reserve bei konstant gehaltenem Informationsfluß des Multiplexsignals ; |
| Fig. 16 | Beispiel für den tonsignalabhängigen Zeitverlauf des für die Codierung erforderlichen Gesamtinformationsflusses gemäß Fig. 15, wobei die Informationsfluß-Reserve im wesentlichen für einen dynamischen Fehlerschutz genutzt wird. |

GESAMTSCHEMA

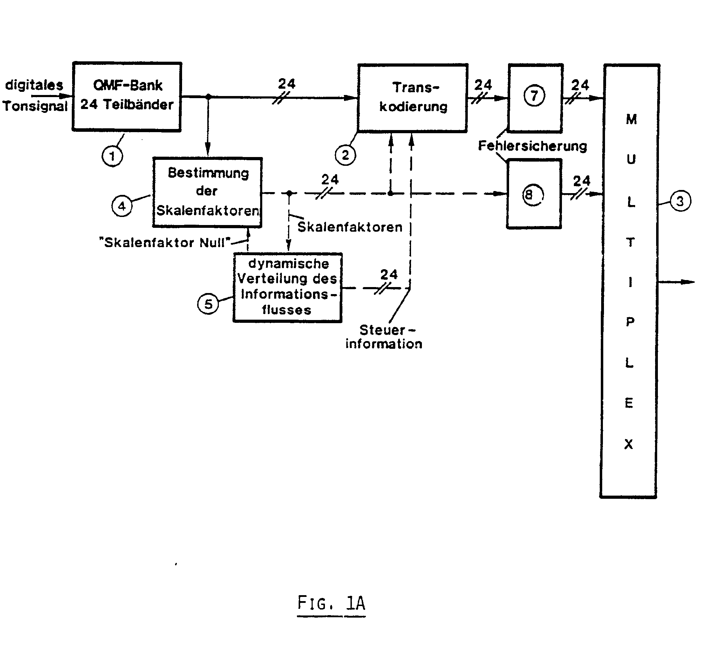

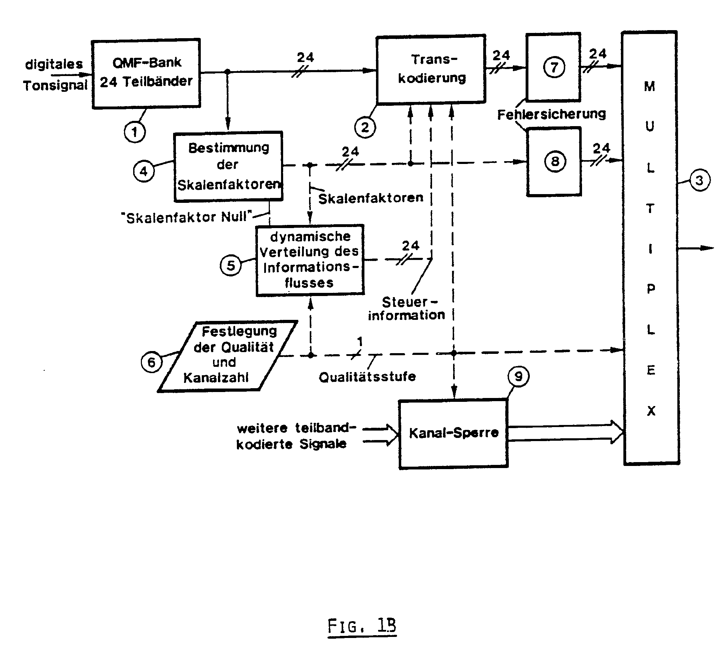

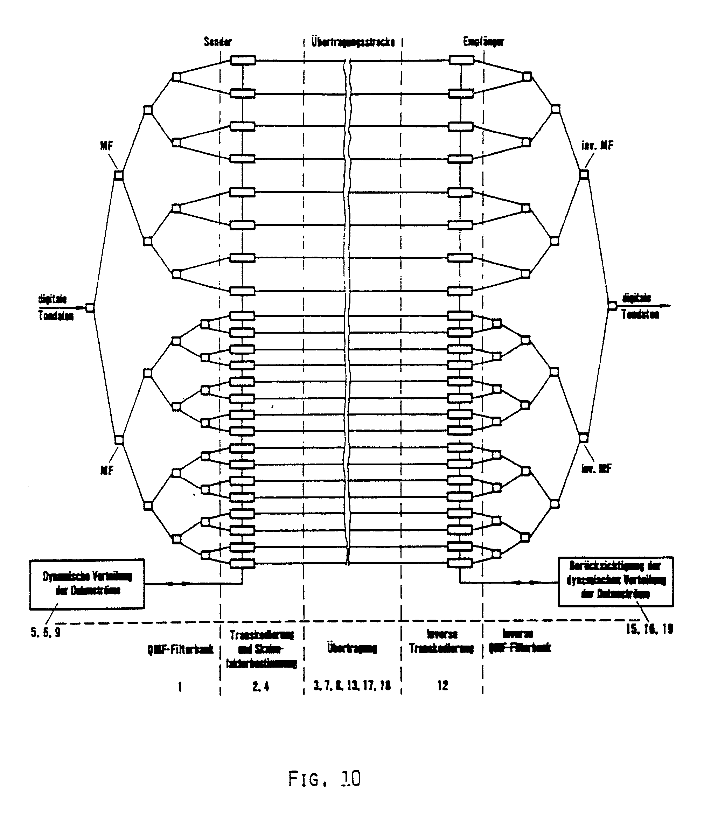

Wie Fig. 1a zeigt, wird ein digitalisiertes Tonsignal, z.B. ein hochwertiges Rundfunksignal, in eine Anzahl von Teilbandsignalen, beispielsweise 24 Teilbandsignale, unterteilt. Die Aufspaltung des digitalen Tonsignals in Teilbänder erfolgt vorzugsweise mit Hilfe einer aus Quadrature-Mirror-Filtern (QMF) bestehenden Filterbank 1, deren Aufbau und Funktionsweise in Fig. 10 näher dargestellt ist und später erläutert werden soll. Das Eingangssignal der Filterbank 1 weist beispielsweise eine Bandbreite von 16 kHz auf und ist mit einer Auflösung von 16 Bit linear quantisiert. Auch größere Bandbreiten und Auflösungen sind möglich, beispielsweise 20 kHz und 18 Bit.

Die hohen Informationsflüsse der am Ausgang der Filterband 1 vorliegenden 24 Teilbandsignale werden in einer nachgeschalteten Transcodierungsstufe 2 reduziert. Die transcodierten Teilbandsignale werden einer speziellen, später noch näher beschriebenen Fehlersicherung 7 unterzogen und einem Multiplexer 3 zugeführt, welcher die 24 Teilbandsignale des Ausführungsbeispiels im Zeitmultiplex auf eine Übertragungsstrecke, beispielsweise eine Rundfunkübertragungsstrecke, gibt.

Für die Informationsflußreduktion können sowohl redundanzreduzierende als auch irrelevanzreduzierende Verfahren eingesetzt werden, wobei auch Kombinationen beider Verfahren denkbar sind. Redundanzreduzierende Verfahren unterdrücken solche Informationen, die für die Rekonstruktion des ursprünglichen Signals nicht benötigt werden. Demgegenüber unterdrücken irrelevanzreduzierende Verfahren diejenigen Informationen, welche zur Unterscheidung des rekonstruierten Signals vom ursprünglichen Signal von dem menschlichen Gehör nicht benötigt werden. Beispielsweise wird bei einem irrelevanzreduzierenden Verfahren die Quantisierung des Nutzsignals innerhalb jedes Teilbandes so gewählt, daß das Quantisierungsrauschen durch das Nutzsignal gerade verdeckt ist. Bei einem irrelevanz- und redundanzreduzierenden Verfahren werden redundanzreduzierende Verfahren, beispielsweise adaptive PCM oder DPCM-Prozessoren, in den Teilbändern eingesetzt und so ausgelegt, daß die Rekonstruktion des ursprünglichen Signals nicht vollständig möglich ist, aber das resultierende Fehlersignal durch das Nutzsignal gerade verdeckt ist.

Ein zweckmäßiges Ausführungsbeispiel einer kombinierten Irrelevanz- und Redundanzreduktion in den Teilbändern wird im folgenden beschrieben. Die Quantisierung der Teilbandsignale erfolgt nach Maßgabe der Mithörschwelle und nach Maßgabe von Skalenfaktoren Die Skalenfaktoren klassieren die Spitzenwerte der Teilbandsignalpegel innerhalb eines Zeitintervalls, welches dem zeitlichen Auflösungsvermögen des Gehörs entspricht. Sie werden einer zusätzlichen Irrelevanz- und Redundanzreduktion unterworfen. Die Übertragung erfolgt im Multiplexsignal, wobei die Fehlersicherung 8 spezielle, später noch zu beschreibende Eigenschaften aufweist.

Dynamische Informationsfluß-Verteilung

Eine invariante Verteilung des Informationsflusses auf die Teilbänder ist im Sinne einer optimalen Irrelevanzreduktion ungünstig, weil der Verlauf der Mithörschwelle von der spektralen und zeitlichen Struktur des Nutzsignals abhängt. Deshalb werden erfindungsgemäß die Quantisierungen der Teilbandsignale in der Stufe 2 gesteuert ("dynamische Verteilung" des zur Verfügung stehenden Informationsflusses auf die Teilbänder).

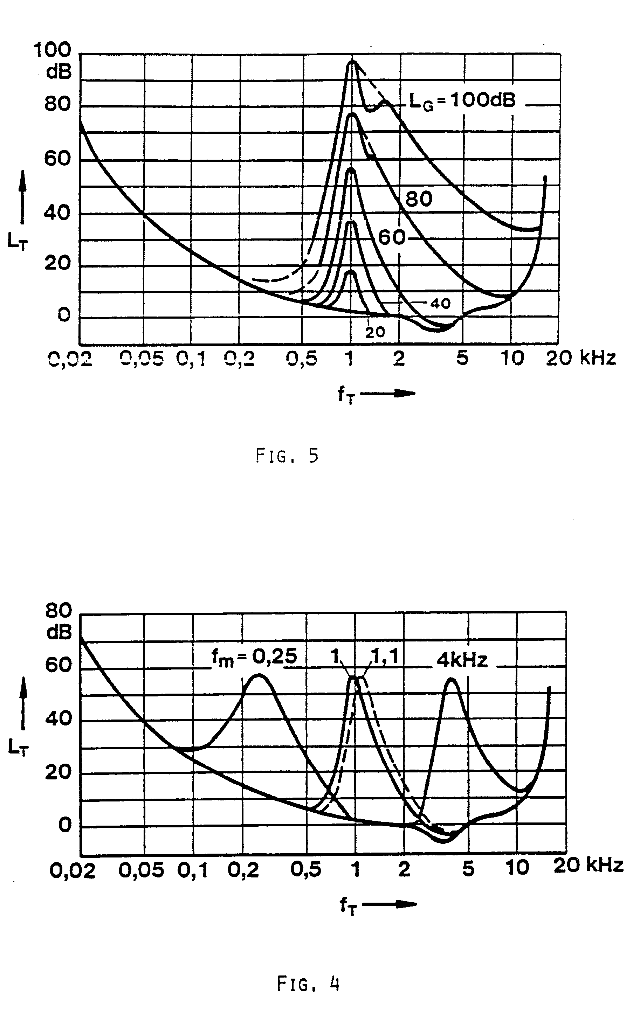

Die Steuersignale für die Quantisierungen der Teilbandsignale in der Transcodierungsstufe 2 werden in einer Stufe 5 nach Maßgabe der spektralen und zeitlichen Mithörschwellen des menschlichen Gehörs gewonnen. Unter der Steuerung dieser Steuersignale in der Stufe 2 erfolgt die dynamische Verteilung des Informationsflusses auf die einzelnen Teilbänder unter Berücksichtigung der Vor-, Simultan- und Nachverdeckung des menschlichen Gehörs, wie im einzelnen anhand der Figuren 5 bis 8 noch näher erläutert wird. Dabei werden

a) Teilbänder des Nutzsignals, die durch benachbarte Teilbänder desselben Nutzsignals verdeckt werden, nicht oder nur teilweise übertragen, und

b) Teilbänder des Nutzsignals, die durch benachbarte Teilbänder desselben Nutzsignals nicht (vollständig) verdeckt werden, nur so fein quantisiert, daß das resultierende Quantisierungsrauschen durch den höheren Nutzsignalpegel der benachbarten Teilbandsignale verdeckt ist.

Damit läßt sich eine gegenüber dem Stand der Technik höhere Irrelevanzreduktion erzielen.

Bekannte Verfahren erreichen eine Reduktion des Informationsflusses dadurch, daß die Quantisierung der Teilbandsignale nach Maßgabe der innerhalb eines Teilbandes wirksamen Verdeckung erfolgt. Beispielsweise gilt für ein reines irrelevanzreduzierendes Verfahren näherungsweise die in der DE-PS 3440613 angegebene Beziehung

$$ld \; q_{i\,min} = 32 \; lg \left( \frac{f_{oi}}{f_{ui}} \right) + 1 \; \left[ \frac{bit}{Abtastwert} \right] \qquad (1)$$

wobei

$q_{i\,min}$ die minimale Zahl der Quantisierungsstufen im Teilband i,

$f_{oi}, f_{ui}$ die obere bzw. untere Grenzfrequenz des Teilbandes i

bedeuten. Der resultierende erforderliche Informationsfluß für alle Teilbänder ergibt sich dann zu :

$$r_{min} = 2 \cdot \sum_{i=1}^{n} (f_{oi} - f_{ui}) \cdot ld \; q_{i\,min} \; \left[ bit/s \right] \qquad (2)$$

Der resultierende erforderliche Informationsfluß ist konstant, er beträgt für eine Auflösung in 24 Teilbänder etwa 100 Kbit/s.

Dieser Wert reduziert sich unter der Berücksichtigung der gegenseitigen Verdeckung der Teilbandsignale. Beispielsweise kann für ein etwa gleichmäßig verdeckendes, breitbandiges Nutzsignal die Auflösung aller Teilbänder, die auf der Frequenzachse oberhalb des ersten Teilbandes liegen, so reduziert werden, daß sich der erforderliche Informationsfluß um etwa 30% vermindert. Für ein schmalbandiges Nutzsignal ist prinzipiell eine wesentlich größere Datenreduktion möglich, weil der Informationsfluß in vielen Teilbändern zu Null gesetzt werden kann.

Die signalabhängig gesteuerten Quantisierungen der Teilbandsignale führen im Prinzip zu einem erforderlichen Informationsfluß, der weitgehend von der spektralen und zeitlichen Struktur des Nutzsignals abhängt und daher signalabhängig schwankt, etwa im Bereich 20... 70 Kbit/s. Auf die vorteilhafte Nutzung eines signalabhängig schwankenden Informationsflusses wird später näher eingegangen.

Skalenfaktor

Die Transcodierung der Teilbandsignale erfolgt bei dem Ausführungsbeispiel nach Fig. 1a nicht nur nach Maßgabe des Mithörschwellenkriteriums im Sinne einer Irrelevanzreduktion unter der Steuerung der Stufe 5, sondern ferner nach Maßgabe von Skalenfaktoren, welche die Spitzenwerte der Teilbandsignalpegel innerhalb eines bestimmten Zeitintervalls Klassieren und welche für die Transcodierung jedes Teilbandsignals dessen Auflösung innerhalb des Zeitintervalls festlegen. Die Einzelheiten für die Bestimmung der Skalenfaktoren in der Stufe 4 und deren Auswertung bei der Transcodierung in der Stufe 2 sowie deren Übertragung werden im folgenden noch näher erläutert. Skalenfaktoren für die Teilbandsignale erweisen sich aus drei Gründen vorteilhaft :

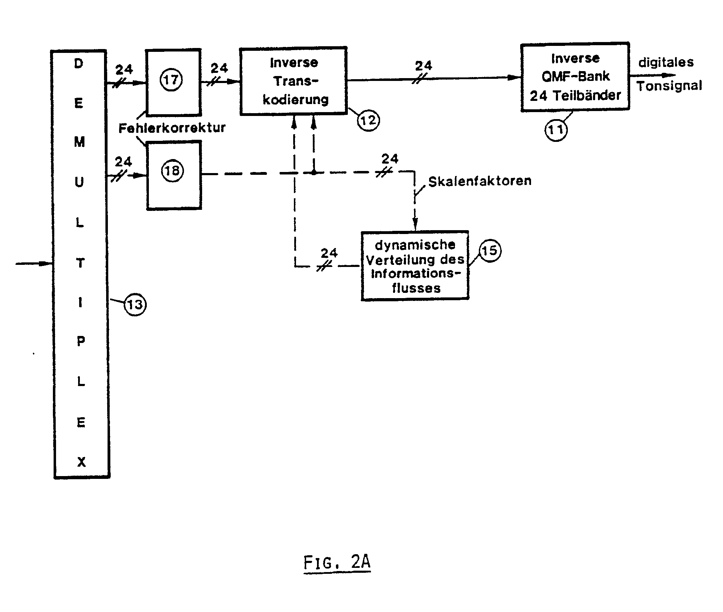

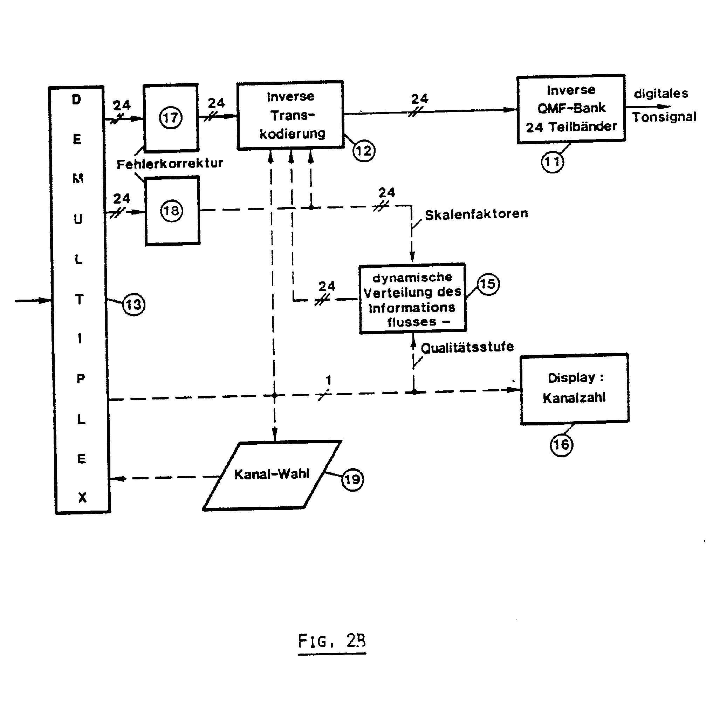

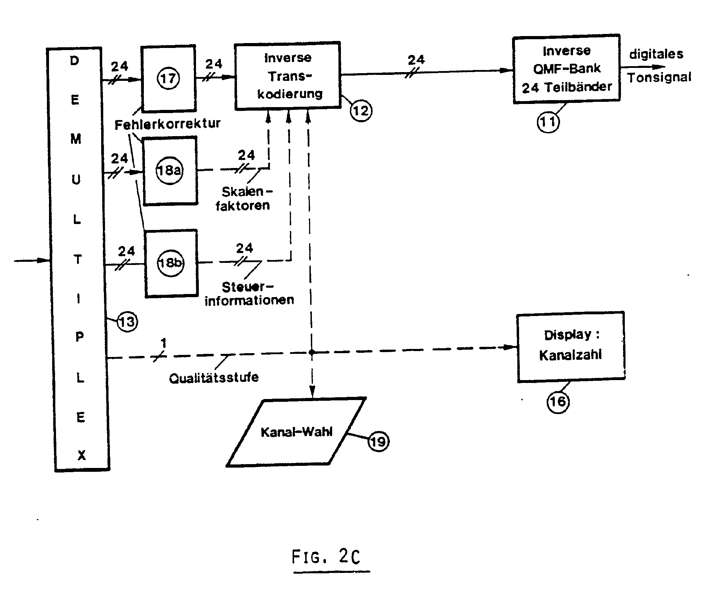

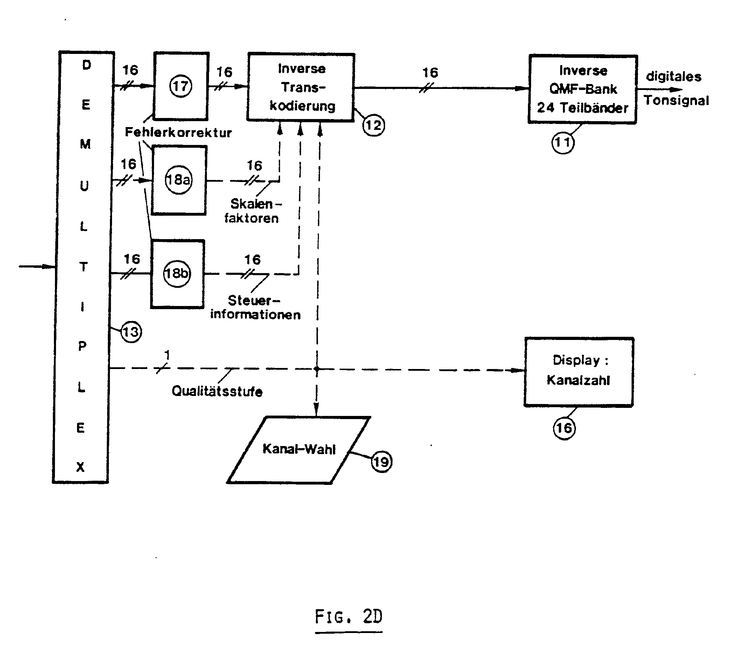

1. Sie Skalenfaktoren für die Teilbandsignale enthalten alle Informationen, welche für die Bestimmung der Steuergröße nach dem Mithörschwellenkriterium in Stufe 5 erforderlich sind. Die Übertragung der Skalenfaktoren als Nebeninformation reicht daher aus, um empfangsseitig eine inverse Transcodierung vorzunehmen (vgl. Fig. 2a). Und zwar werden aus den empfangenen Skalenfaktoren die Informationen über die Verteilung des Gesamtinformationsflusses auf die Teilbänder gewonnen.

2. Da der durch den Skalenfaktor klassifizierte Spitzenwert des Teilbandsignalpegels durch die Abtastwerte des betreffenden Teilbandsignals nicht überschritten werden kann, kann folglich der Störpegel innerhalb jedes Teilbandes, welcher durch Bitfehler verursacht wird, den Spitzenwert des Teilbandsignalpegels nicht über die Klassifizierungsgenauigkeit hinaus überschreiten. Dadurch ergibt sich durch Bitfehler grundsätzlich ein Störspektrum, welches durch das Nutzsignal größtenteils verdeckt ist. Selbst bei Auftreten maximaler Bitfehler, d.h. vollständiger Zerstörung aller Abtastwerte, ist durch den in diesem Falle nur noch vorhandenen Skalenfaktor gewährleistet, daß die spektrale Hüllkurve des Störspektrums der Hüllkurve des Nutzsignals näherungsweise entspricht, mithin eine Sprachverständlichkeit noch erhalten bleibt.

3. Da die Skalenfaktoren der Teilbandsignale alle wesentlichen Informationen enthalten, welche für die Bestimmung der Steuergröße nach dem Mithörschwellenkriterium erforderlich sind, ist es notwendig, diese Information bei der Übertragung gegen Bitfehler stark zu schützen. Dies kann z.B. durch Einfügung von Redundanz geschehen. Aufgrund dieser Einfügung der Redundanz ist es besonders wichtig, eine Minimierung der Übertragung der Skalenfaktoren vorzunehmen. Dem kann durch eine minimal notwendige Wortlänge (sh. Abschnitt Skalenfaktorbildung) und eine von der Statistik des Signals und den Erfordernissen des Gehörs abhängige Übertragungshäufigkeit entsprochen werden.

Den Erfordernissen des Gehörs kann Rechnung getragen werden, indem die zeitliche Maskierung, vor allem der Effekt der Nachverdeckung genutzt wird (Irrelevanzreduktion). Dies bedeutet, daß bei schnellem Ausklingverhalten des Tonsignals die Skalenfaktoren nicht genau bestimmt werden müssen, sondern z.B. aufgrund von Interpolationen von zu früheren und späteren Zeitpunkten ermittelten Skalenfaktoren angenähert werden können. Da die zeitliche Vorverdeckung im allgemeinen sehr kurz und stark signalabhängig ist (1 bis 20 ms), müssen in Fällen schneller Signalanstiege die Skalenfaktoren häufiger übertragen werden.

Einer Redundanzreduktion bei der Übertragung der Skalenfaktoren wird entsprochen, indem bei solchen Teilbandsignalen, deren Pegel sich über einen bestimmten Zeitraum nicht, oder nur geringfügig ändern, die Skalenfaktoren nur selten übertragen werden.

Dadurch, daß nicht notwendigerweise für alle Teilbänder pro zeitlichen Block Skalenfaktoren übertragen werden müssen, sondern abhängig von den Erfordernissen des Gehörs bzw. des Tonsignals auch näherungsweise durch Interpolationsmechanismen bestimmt werden können, ergibt sich eine Übertragungsrate aller Skalenfaktoren von ca. 10 bis 20 kbit/s.

Da empfangsseitig die Transcodierung allein durch die detektierten Skalenfaktoren gesteuert wird, sind die teilbandcodierten Multiplexsignale besonders unempfindlich gegenüber Bitfehlerstörungen, wenn die Skalenfaktoren sendeseitig in der Stufe 8 einer wirkungsvollen Fehlersicherung unterzogen werden. Der Vorteil der Verwendung von Skalenfaktoren gegenüber anderen datenreduzierenden Methoden, beispielsweise adaptive PCM- oder DPCM, liegt also darin, daß eine hohe Unempfindlichkeit gegenüber Bitfehlern erreicht wird, wenn nur der durch die Skalenfaktoren verursachte Nebeninformationsfluß effektiv geschützt wird. Die Höhe dieses Nebeninformationsflusses schwankt signalabhängig etwa im Bereich 10... 20 Kbit/s, weil zum Zwecke einer Irrelevanz- und Redundanzreduktion die für die Bestimmung der Skalenfaktoren zugrunde gelegten Zeitintervalle (Blocklängen) der zeitlichen Verdeckung des menschlichen Gehörs und der zeitlichen Struktur des jeweiligen Teilbandsignals entsprechen.

Für die Übertragung der transcodierten Teilbandsignale sowie der Skalenfaktoren ist also ein Gesamtinformationsfluß erforderlich, der signalabhängig im Bereich 30... 90 Kbit/s schwankt.

Nutzung des schwankenden Informationsflusses

Durch die signalabhängige Schwankung des für die Codierung erforderlichen Gesamtinformationsflusses kann das erfindungsgemäße Verfahren vorteilhaft ausgestaltet werden.

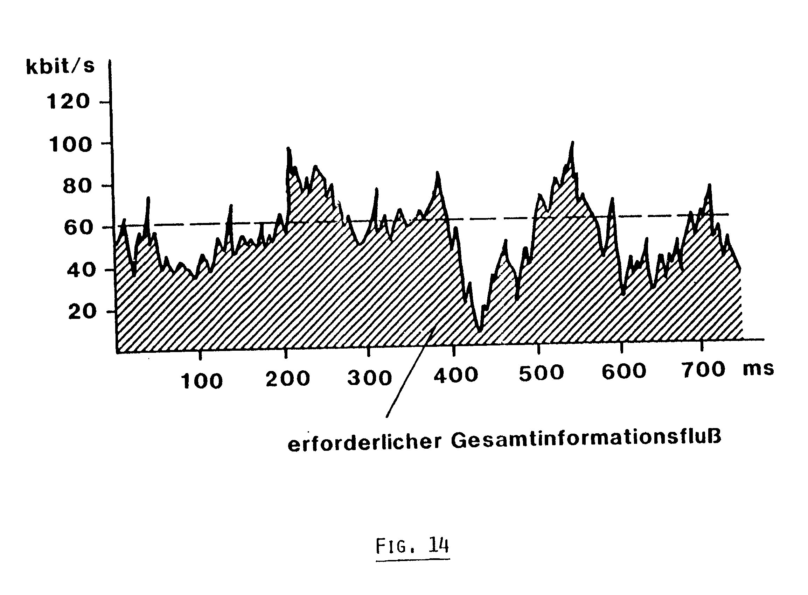

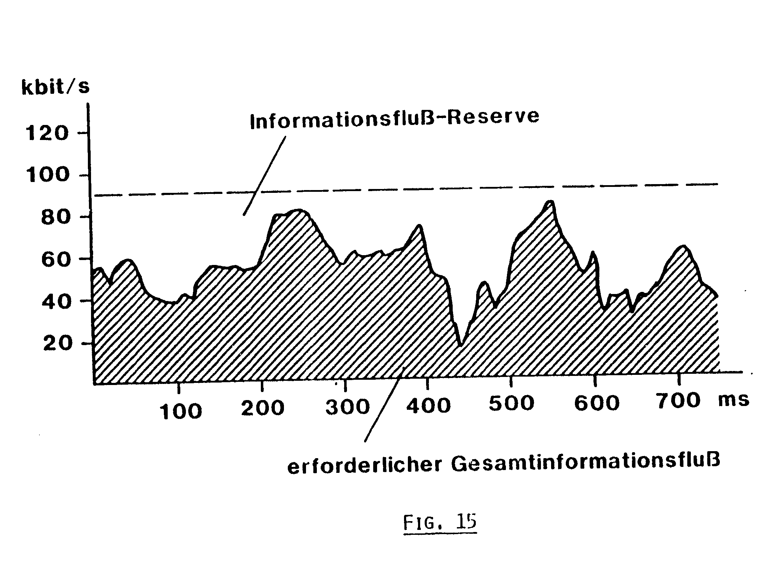

Fig. 14 zeigt beispielshaft den zeitlichen Verlauf des erforderlichen Gesamtinformationsflusses. Die gestrichelte Linie stellt den durchschnittlich erforderlichen Gesamtinformationsfluß (etwa 60 Kbit/s) dar. Dieser Wert könnte zugrunde gelegt werden, wenn sämtliche Schwankungen innerhalb eines großen Zeitabschnittes mit Hilfe eines entsprechend großen Pufferspeichers ausgeglichen werden können. Dies ist für den Fall der Tonsignalübertragung wegen der entsprechend langen Verzögerungszeit nicht möglich, jedoch ergibt sich für die Tonsignalspeicherung eine erste vorteilhafte Ausgestaltung des erfindungsgemäßen Verfahrens :

1) Der Informationsfluß des Multiplexsignales schwankt.

Wird das Multiplexsignal so ausgelegt, daß am Ausgang des Multiplexers 3 in Fig. 1A der Informationsfluß in ähnlicher Weise schwankt wie der für das codierte Tonsignal aufgewendete Gesamtinformationsfluß an den Eingängen der Stufen 7 und 8, so resultiert daraus eine besonders hohe Datenreduktion für den Fall der Speicherung. Für spezielle Speichertechniken, beispielsweise Speicherung auf Rechner-Magnetplatten, können sogar die Stufen 3, 7 und 8 entfallen, so daß der zu speichernde Gesamtinformationsfluß nicht höher sein muß als der erforderliche Gesamtinformationsfluß.

Der Langzeit-Durchschnittswert des zu speichernden Gesamtinformationsflusses kann sogar unter 60 Kbit/s liegen, weil bei Speicherung eines vollständigen Programmes alle darin enthaltenen kurzzeitigen Pausen (beispielsweise in der Sprache) nur einen sehr geringen Gesamtinformationsfluß erfordern (etwa 10 bis 15 Kbit/s, hauptsächlich für die Skalenfaktoren). Für die Speicherung von Sprache können daher weniger als 40 Kbit/s zugrunde gelegt werden.

2) Der Informationsfluß des Multiplexsignals ist konstant.

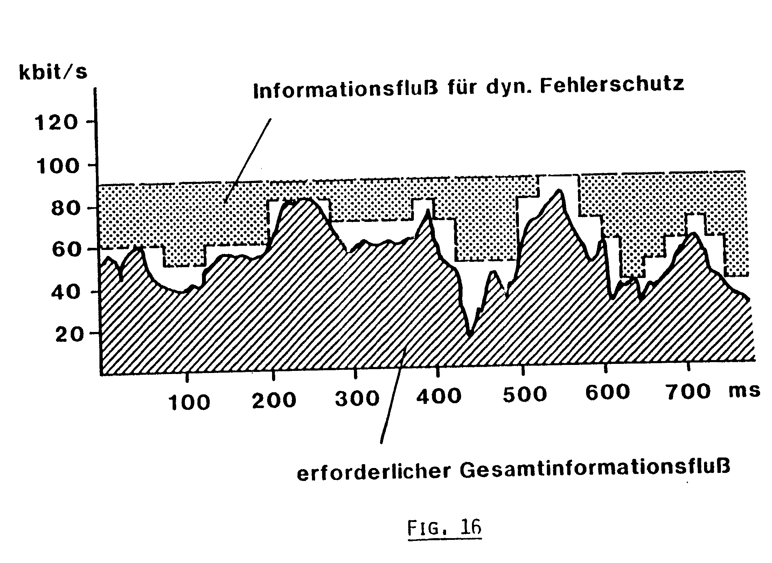

Im Fall der Übertragung des Multiplexsignals ist dessen konstanter Informationsfluß vorteilhaft. Da die durch Pufferspeicher verursachte Verzögerungszeit nur gering sein darf, können die Schwankungen des erforderlichen Gesamtinformationsflusses nur geringfügig ausgeglichen werden. Die verbleibenden Schwankungen sind beispielhaft in Fig. 15 dargestellt. Der konstante Informationsfluß des Multiplexsignales ist durch die gestrichelte Gerade angegeben (90 Kbit/s). Der obere Bereich stellt somit eine Informationsfluß-Reserve dar, die signalabhängig schwankt und auf verschiedene Weise genutzt werden kann :

    a) Für einen erhöhten Abstand der Quantisierungsrauschpegel zu der resultierenden Mithörschwelle ("Erhöhter Rauschabstand").

    b) Für den Fehlerschutz 7, 8 und die Bildung des Multiplexsignals in 3 ("Dynamischer Fehlerschutz").

    c) Für die Übertragung beliebiger Zusatzinformationen im Multiplexsignal, die nicht zeitkritisch und unabhängig vom Tonsignal sind, z.B. Programminformationen oder Radiotext-Information ("Zusatzsignal-Übertragung").

Die Informationsfluß-Reserve kann natürlich in beliebiger Kombination der drei Möglichkeiten genutzt werden. Im folgenden werden der erhöhte Rauschabstand und der dynamische Fehlerschutz noch näher beschrieben.

a) Erhöhter Rauschabstand

Quellencodierungsverfahren, welche die Irrelevanz der digitalen Tonsignale vollständig beseitigen (d.h., die den Effekt der spektralen Vor-, Simultan- und Nachverdeckung vollständig nutzen), können in bestimmten Anwendungsfällen Probleme verursachen :

    — Im Falle einer Kaskadierung derartiger Quellencodierungsverfahren kann das Quantisierungsrauschen die Mithörschwellen überschreiten. Würde beispielsweise sowohl die Speicherung als auch die Übertragung eines Rundfunk-Programmsignals mit Hilfe eines derartigen Quellencodierungsverfahrens erfolgen, können für kritische Tonsignale Qualitätsbeeinträchtigungen wahrnehmbar werden.

    — Im Falle einer nachträglichen empfängerseitigen Anhebung oder Absenkung bestimmter Frequenzanteile des Nutzsignals kann sich die spektrale Verdeckung des Nutzsignals so verändern, daß Qualitätsbeeinträchtigungen wahrnehmbar werden. Diese Gefahr besteht, wenn der Pegel eines Teilbandsignals, welches benachbarte Teilbandsignale verdeckt, empfängerseitig abgesenkt wird, oder wenn der Pegel eines Teilbandsignales, welches durch ein benachbartes Teilbandsignal ganz oder teilweise verdeckt wird, empfängerseitig angehoben wird.

Um Qualitätsbeeinträchtigungen für diese Anwendungsfälle auszuschließen, erfolgt die erfindungsgemäße dynamische Verteilung des Informationsflusses nicht allein nach Maßgabe einer maximalen Datenreduktion, sondern auch nach Maßgabe einer Reserve an Rauschabstand (sog. "mask-to-noise Reserve"). Die "mask-to-noise Reserve" schwankt signalabhängig, und zwar etwa proportional der Informationsfluß-Reserve, wie beispielhaft in Fig. 15 dargestellt. Ist das Nutzsignal z.B. so schmalbandig, daß der Informationsfluß in vielen Teilbändern zu Null gesetzt wird, erfolgt eine entsprechende Erhöhung des Informationsflusses (und damit der Auflösung) für diejenigen Teilbandsignale, welche eine Verdeckung hervorrufen. Eine derartige Erhöhung erfolgt soweit, wie es die Informationsfluß-Reserve zuläßt. Daher ist die Auflösung der verdeckenden Teilbandsignale unter Umständen wesentlich höher als das Mithörschwellenkriterium es erfordert.

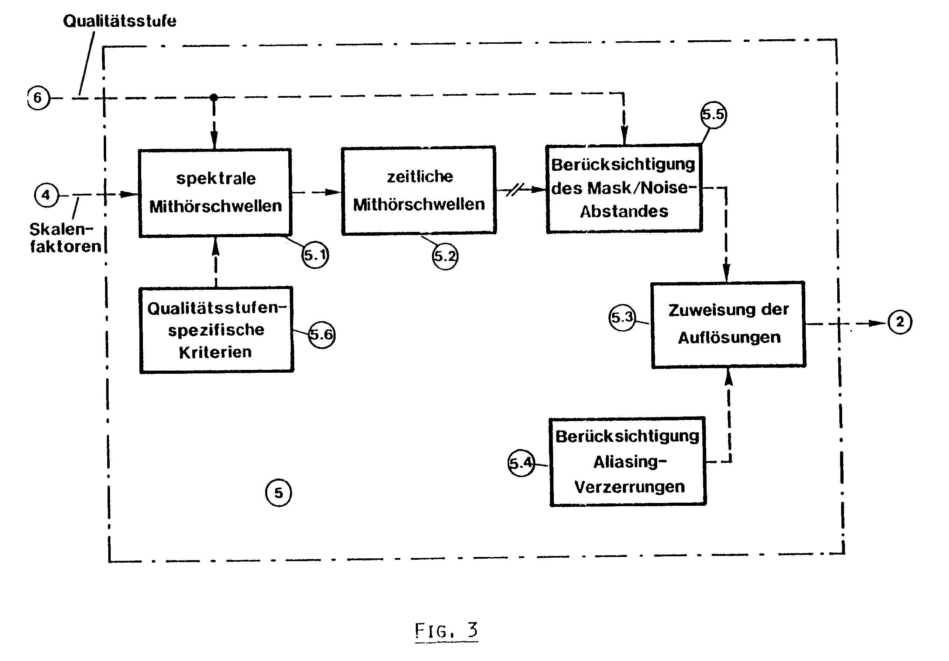

Der Vorteil dieser Form der dynamischen Verteilung des Informationsflusses auf die Teilbänder liegt darin, daß beispielsweise Pegeltöne mit sehr hoher Auflösung (z.B. 16 bis 18 bit linear quantisiert) übertragen werden. Die Übertragung einer einzelnen Spektrallinie mit 16 bit Auflösung in einem 500 Hz breiten Teilband erfordert theoretisch 16 Kbit/s, allerdings wegen der zu berücksichtigenden Aliasing Verzerrungen (auf welche später eingegangen wird, vgl. Fig. 3) einen etwa doppelt so hohen Bit-Fluß. Damit werden je nach Frequenzlage zwei oder mehr Spektrallinien gleichzeitig ohne meßtechnisch erfaßbare Qualitätseinbuße übertragen, wenn etwa 500 Hz breite Teilbänder und ein Bit-Fluß des Multiplexsignals von etwa 90 Kbit/s zugrundegelegt werden. Wesentliche Funktionen der in Fign. 1a und 2a dargestellten Teilband-Übertragungsstrecken lassen sich daher meßtechnisch einfach überprüfen, indem beispielsweise Sinustöne beliebiger Frequenz und Amplitude übertragen werden.

Für den dynamischen Fehlerschutz gilt folgendes :

Für die Kanalcodierung, d.h. für die Fehlersicherung der transcodierten Abtastwerte in Stufe 7, der Skalenfaktoren in Stufe 8, sowie für die Bildung des Multiplexsignals in Stufe 3 ist ein zusätzlicher Informationsfluß erforderlich. Entsprechend setzt sich der Informationsfluß des Multiplexsignals aus den für die Quellen- und Kanalcodierung eingesetzten Informationsflüssen zusammen.

Die bei konstantem Informationsfluß des Multiplexsignals vorhandene dynamische Informationsfluß-Reserve ist für die Kanalcodierung nutzbar, dergestalt, daß der Fehlerschutzgrad des Multiplexsignals abhängig von der momentan vorhandenen Informationsfluß-Reserve gesteuert wird (dynamischer Fehlerschutz). Die Steuerung des Fehlerschutzgrades erfolgt vorteilhaft stufenweise. Fig. 1b zeigt beispielsweise einen stufenweise, signalabhängig schwankenden Informationsfluß für den dynamischen Fehlerschutz (Bereich zwischen gestrichelter Gerade und stufenförmiger Kurve). Der durch die stufenförmige Kurve beschriebene Informationsfluß stellt gleichzeitig den für die Quellencodierung verfügbaren Gesamtinformationsfluß dar ; er ist etwas größer als der erforderliche Gesamtinformationsfluß.

Der dynamische Fehlerschutz führt zu einer Erhöhung des durchschnittlichen Fehlerschutzgrades, entsprechend der durchschnittlich vorhandenen Informationsfluß-Reserve. Damit wird die Wahrscheinlichkeit für Störungen durch Bitfehler reduziert. Der dynamische Fehlerschutz bewirkt ferner, daß diejenigen Tonsignale, welche einen geringen Gesamtinformationsfluß erfordern, mit hohem Fehlerschutzgrad übertragen werden und Tonsignale, welche einen hohen Gesamtinformationsfluß erfordern, mit geringem Fehlerschutzgrad übertragen werden. Diese Fehlerschutzeigenschaft wirkt sich besonders vorteilhaft aus, weil Tonsignale, die einen geringen Gesamtinformationsfluß benötigen, die durch Bitfehler verursachten Störsignale nur schwach verdecken. Gerade diese empfindlichen Tonsignale werden stark geschützt. Beispielsweise ist für ein Sprachsignal, insbesondere in den Sprachpausen, oder während bestimmter Musikpassagen ("Stille im Konzertsaal") der erforderliche Gesamtinformationsfluß besonders gering und damit der Fehlerschutzgrad besonders hoch.

Die Auslegung des dynamischen Fehlerschutzgrades erfolgt zweckmäßigerweise derart, daß bei gegebener Bitfehlerrate die subjektive Störwirkung näherungsweise unabhängig vom Tonsignal ist.

Qualitätsabstufung

Ein weiteres Merkmal des erfindungsgemäßen Quellencodierungsverfahrens ist die Möglichkeit, sendeseitig in der Stufe 6 (Fig. 1b) die Qualität der Quellencodierung festzulegen. Die in der Stufe 5 festgelegten und später anhand der Fign. 4 bis 8 näher erläuterten Kriterien für die Quantisierungen der Teilbandsignale werden mit Hilfe der Qualitätsfestlegung (Stufe 6) bewertet. Dies geschieht auf folgende Weise :

a) Der für die Codierung des Tonsignales verfügbare Gesamtinformationsfluß wird durch die Qualitätsfestlegung bestimmt.

b) Der für die dynamische Verteilung bereits vorbeschriebene Gesichtspunkt "Erhöhter Rauschabstand" wird bewertet. Die "mask-to-noise-Reserve" wird abhängig von der Qualitätsfestlegung dimensioniert.

c) Das Mithörschwellenkriterium wird abhängig von der Qualitätsfestlegung so ausgelegt, daß bestimmte kritische Nutzsignale, die einen hohen Gesamtinformationsfluß erfordern und selten vorkommen, wahrnehmbare, aber nicht störende Qualitätsbeeinträchtigungen aufweisen. Beispielsweise werden Qualitätsabstufungen durch die Wahrscheinlichkeit festgelegt, mit welcher diese Qualitätsbeeinträchtigungen auftreten.

d) Abhängig von der Qualitätsfestlegung wird für kritische Nutzsignale eine Anzahl der Teilbandsignale zu Null gesetzt. Dies geschieht vorrangig für Teilbandsignale mit größerer Bandbreite bzw. größerem Informationsfluß und zusätzlich nach Maßgabe minimaler Störwirkung : Die verhältnismäßig hohe Störwirkung bei nicht ausreichender Auflösung bestimmter Teilbandsignale wird vermieden, indem zusätzlicher Informationsfluß zugunsten dieser Teilbandsignale durch Nullsetzen unwesentlicher Teilbandsignale gewonnen wird. Unwesentliche Teilbandsignale sind solche, die im Verhältnis zu anderen Teilbandsignalen einen geringen Pegel aufweisen und nur einen unbedeutenden Beitrag zur Wahrnehmung der Klangfarbe liefern.

Wesentlich ist, daß eine Reduktion des Gesamtinformationsflusses mit einer minimalen Reduktion der Qualität verbunden ist, weil die dynamische Verteilung des Informationsflusses auf die Teilbänder durch Stufe 5 nicht nur nach Maßgabe des zur Verfügung stehenden Gesamtinformationsflusses, sondern auch nach Maßgabe von qualitätsstufenspezifischen Kriterien erfolgt.

Durch eine stufenweise Reduktion der Qualität ist es möglich, anstelle eines Nutzsignals zwei oder mehrere Nutzsignale gleichzeitig mit demselben Informationsfluß des Multiplexsignals zu übertragen. Da durch die Qualitätsfestlegung in der Stufe 6 der für jedes Nutzsignal zur Verfügung stehende Gesamtinformationsfluß festgelegt ist, wird die Qualitätsabstufung so gewählt, daß mit Wahl der Qualität die Zahl der übertragbaren Kanäle festliegt und umgekehrt. Dazu werden die Kanalsperre 9 (Fig. 1b) sowie die Multiplexstufe 3 entsprechend geschaltet. Die Schaltinformation wird im Multiplexsignal mitübertragen, um empfangsseitig eine qualitätsstufenadaptive Decodierung zu ermöglichen. Eine Fehlersicherung der Schaltinformation erfolgt dadurch, daß diese Schaltinformation häufiger als benötigt übertragen wird, beispielsweise im 100 ms-Intervall.

Folgende Korrelation zwischen Qualitätsabstufungen und Kanalzahl ist denkbar :

| Anwendung | Qualitäts- stufe | Kanal- zahl | Bitfluß pro Kanal |
|---|---|---|---|
| Speicherung, Über- tragung/Studio | 1 | 1 | 200 kbit/s |
| Speicherung, Über- tragung/Standard | 2 | 2 | 100 kbit/s |
| Übertragung/Kommentar | 3 | 3 | 65 kbit/s |
| Übertragung/Telefon | 4 | 6 | 33 kbit/s |

Eine Reduktion des Informationsflusses pro Kanal führt in charakteristischer Weise nur für solche Nutzsignale zu einer Qualitätsbeeinträchtigung, welche auch nach erfolgter Irrelevanzunterdrückung und Redundanzreduktion einen höheren Informationsfluß benötigen als beispielsweise gemäß vorstehender Tabelle zugelassen ist. Die vorliegend vorgesehene stufenweise Reduktion des Informationsflusses zeichnet sich dadurch aus, daß die Wahrscheinlichkeit für das Auftreten qualitätsbeeinträchtigter Signale geringer ist als bei bekannten Verfahren zur stufenweisen Reduktion des Informationsflusses. Die Wahrscheinlichkeit für das Auftreten qualitätsbeeinträchtigter Sprachsignale beispielsweise ist für die Qualitätsstufen 1 bis 3 der Tabelle gleich null und für die Qualitätsstufe 4 kleiner als 100%, wobei der Grad der Qualitätsbeeinträchtigung wesentlich niedriger liegt als bei der für Telefonsignale üblichen Bandbreitenreduktion.

### Empfänger

Empfangsseitig werden gemäß Fig. 2a in der Demultiplex-Stufe 13 die fehlergesicherten transkodierten Teilbandsignale, die dazugehörigen fehlergesicherten Skalenfaktoren sowie die Information zur sendeseitig festgelegten Qualitätsstufe zurückgewonnen. Mit Hilfe der Qualitätsstufen-Information kann die Anzahl der alternativen Kanäle im Display 16 (Fig. 2b) angezeigt werden, so daß am Kanal-Wahlschalter 19 die von der Demultiplex-Stufe 13 auszugebenden Daten vom Hörer festgelegt werden können. In den Stufen 17 und 18 werden die Fehlersicherungsdaten der transkodierten Teilbandsignale bzw. der Skalenfaktoren entfernt sowie Fehlerkorrekturmaßnahmen durchgeführt. Die Skalenfaktoren dienen wie auf der Sendeseite als Eingangsinformation der Stufe 15 zur Steuerung der Verteilung des Informationsflusses auf die Teilbänder. Die Stufe 15 ist daher identisch mit der sendeseitigen Stufe 5 (vgl. Fig. 3). Nach Maßgabe der in Stufe 15 gewonnenen Steuerinformationen, der Skalenfaktoren sowie der Qualitätsstufen-Information erfolgt in der Stufe 12 die zur sendeseitigen Stufe 2 inverse Transkodierung, so daß 16 bis 18 bit-linear-quantisierte Teilbandsignale an der inversen QMF-Filterbank 11 anliegen und hier die Rückgewinnung des breitbandigen digitalen Tonsignals erfolgen kann. Einzelheiten zum Aufbau und zur Arbeitsweise der QMF-Filterbank 11 werden später anhand der Fig. 10 noch näher erläutert.

### Zweites Ausführungsbeispiel

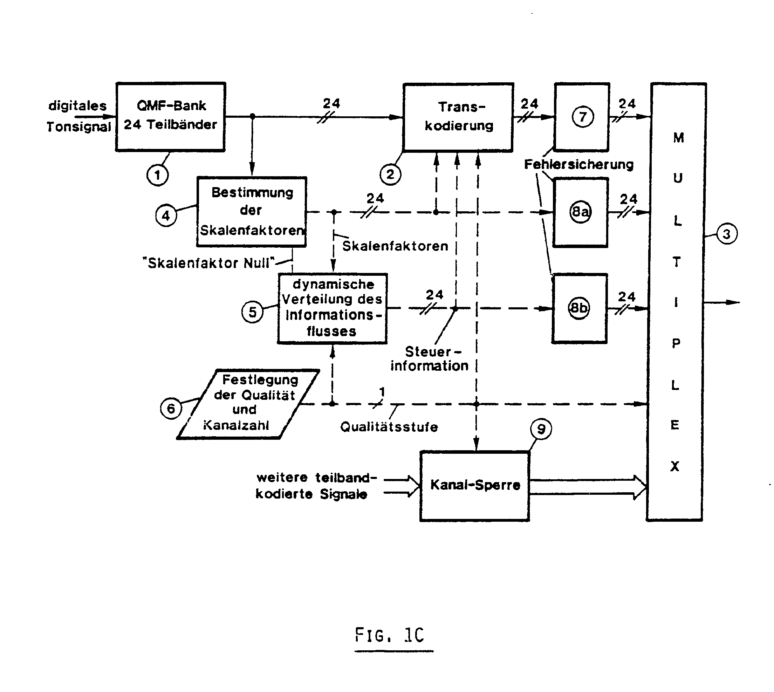

Ein weiteres Ausführungsbeispiel des erfindungsgemäßen Verfahrens ist in den Fign. 1c (Sendeseite) und Fig. 2c (Empfängerseite) veranschaulicht. Die sendeseitige Kodierung gemäß Fig. 1c ist identisch mit dem vorstehend bereits erläuterten Ausführungsbeispiel gemäß Fig. 1b. Abweichend hiervon ist in Fig. 1c vorgesehen, die Steuerinformationen für die Verteilung des Informationsflusses auf die Teilbänder im Multiplexsignal zu übertragen, wobei in Stufe 8b eine Fehlersicherung der Steuerinformation erfolgt, deren Wirksamkeit ähnlich bemessen wird wie diejenige der Skalenfaktor-Fehlersicherung in Stufe 8a. Bei der empfangsseitigen Dekodierung gemäß Fig. 2c werden in Abweichung von Fig. 2b die Steuerinformationen nicht nach Maßgabe der Skalenfaktoren neu ermittelt (wie dies in Stufe 15 gemäß Fig. 2b erfolgt), sondern direkt dem Multiplexsignal entnommen. In den Stufen 18a und 18b werden die Fehlersicherungsdaten der Skalenfaktoren bzw. der Steuerinformationen entfernt sowie Fehlerkorrekturmaßnahmen durchgeführt.

Das betrachtete zweite Ausführungsbeispiel erfordert gegenüber dem Ausführungsbeispiel gemäß Fign. 1b und 2b empfangsseitig einen geringeren technischen Aufwand, da die für die inverse Transkodierung in Stufe 12 erforderlichen Steuerinformationen nicht neu ermittelt zu werden brauchen. Der für die Übertragung und Fehlersicherung der Steuerinformationen erforderliche zusätzliche Informationsfluß ist etwa so groß wie für den Skalenfaktor.

### Weitere Ausführungsformen

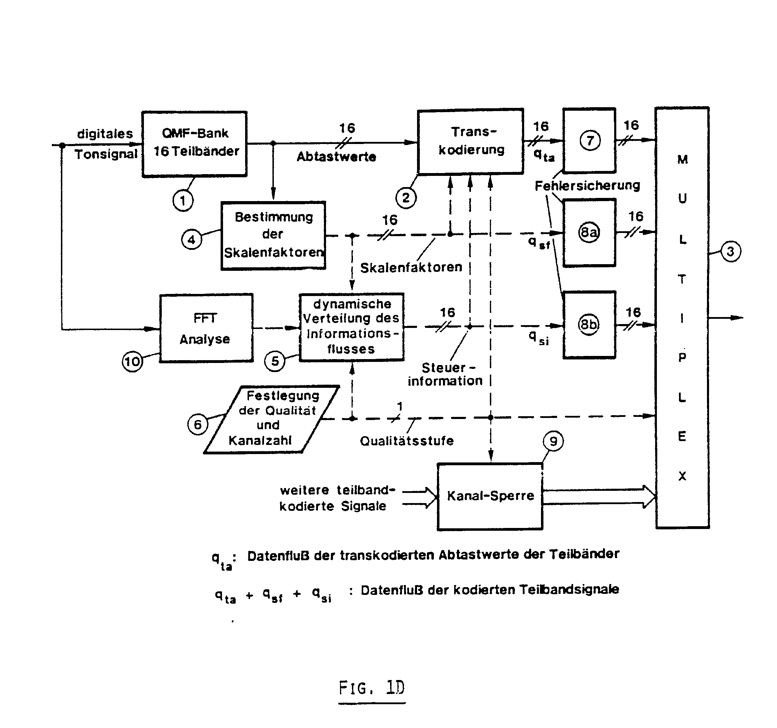

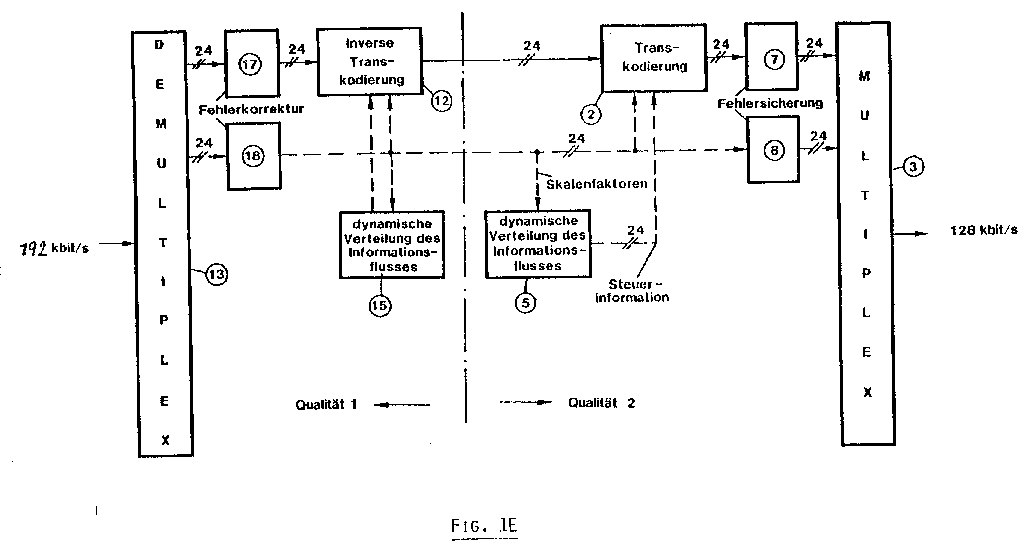

Weitere Ausführungsformen sowie vorteilhafte Ausgestaltungen und Weiterbildungen des erfindungsgemäßen Verfahrens, insbesondere gemäß Fign. 1d, 2d und 1e, werden im Verlauf der folgenden Beschreibung erläutert.

### EINZELHEITEN DES VERFAHRENS

#### Steuerung des Informationsflusses

Die anhand von Fig. 3 näher erläuterte Stufe 5 zur Ableitung des Mithörschwellenkriteriums umfaßt die getrennte Ermittlung der spektralen Mithörschwellen im Block 5.1 und der zeitlichen Mithörschwellen in Block 5.2. Dies geschieht unter Berücksichtigung des verfügbaren Gesamtinformationsflusses durch die Stufe 5.5 sowie in Abhängigkeit qualitätsstufenspezifischer Kriterien in Stufe 5.6. Dabei sind die Stufen 5.1, 5.2 und 5.5 in Serie geschaltet, wobei die Stufe 5.1 mit dem Ausgang der Stufe 4 und ein Steuereingang der Stufe 5.5 mit der Stufe 6 verbunden sind. Desweiteren ist ein erster Steuereingang der Stufe 5.1 ebenfalls mit der Stufe 6 verbunden, während ein zweiter Steuereingang der Stufe 5.1 von der Stufe 5.6 gespeist wird.

Da in der QMF-Filterbank 1 bei stark unterschiedlicher Quantisierung benachbarter Teilbandsignale Aliasing-Verzerrungen auftreten, erfolgt durch eine Stufe 5.4 eine Sollvorgabe bezüglich der maximal zulässigen Quantisierungsunterschiede der benachbarten Teilbandsignale dahingehend, daß die Aliasing-Verzerrungen unhörbar bleiben. Die Stufe 5.4 steuert hierzu die Ausgangsstufe 5.3, die mit dem Ausgang der Stufe 5.5 verbunden ist. Auf diese Weise wird in der Ausgangsstufe 5.3 die Verteilung der Quantisierung unter Berücksichtigung der Mithörschwellenvorgabe durch die Blöcke 5.1 und 5.2, der Vorgabe des verfügbaren Gesamtinformationsflusses durch die Stufe 5.5 sowie der Aliasing-Verzerrungvorgabe durch die Stufe 5.4 festgelegt.

#### Mithörschwellenkriterium

Eine statische Verteilung der Quantisierung der Ausgangssignale innerhalb der einzelnen Teilbänder nach dem Stand der Technik berücksichtigt nur die Maskierung des innerhalb dieser Teilbänder begrenzten Quantisierungsrauschens durch das Nutzsignal in demselben Band. Allein durch die bekannte Berücksichtigung der Maskierung des Quantisierungsrauschens innerhalb der Teilbänder läßt gemäß Gleichung (1) bei der gewählten Aufteilung des breitbandigen Signals 24 Teilbänder eine Reduktion der Datenrate gegenüber einer 16-bit-linear-PCM-Codierung um etwa 400 kbit/s erreichen. Demgegenüber ermöglicht die vorliegend vorgesehene dynamische (signalabhängige) Steuerung der Quantisierung der Teilbandsignale einerseits bei gleicher subjektiver Qualität eine weitergehende Reduzierung der Datenrate sowie eine zusätzliche signalspezifische Qualitätsreserve, andererseits bei nicht verringerter Datenrate eine weitergehende Qualitätsreserve.

#### Spektrale Mithörschwellen

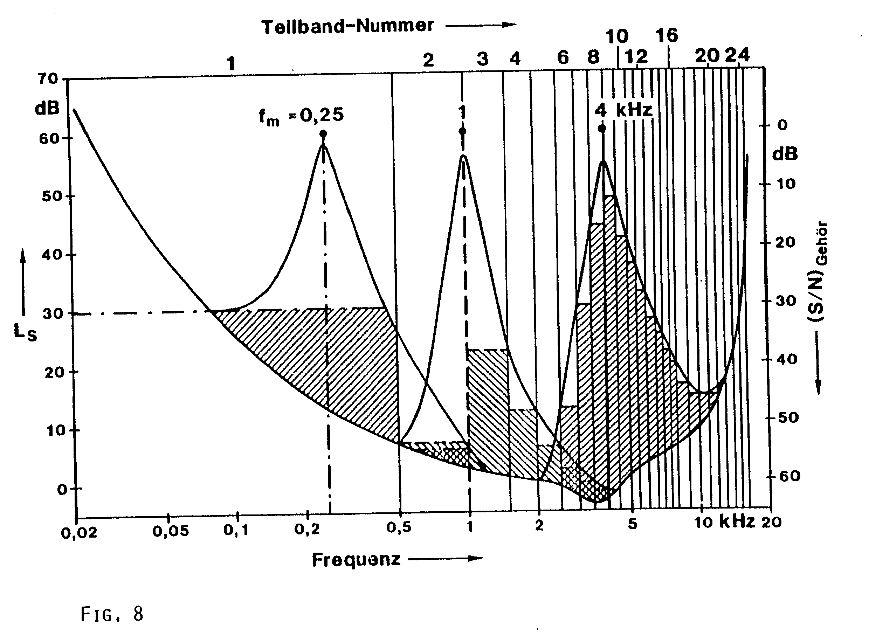

Die vorliegend vorgesehene Steuerung der Quantisierung erfolgt gemäß der maskierenden Wirkung eines Teilbandsignals mit hohem Signalpegel auf die benachbarten Teilbänder. Diese maskierende Wirkung kann bei Anwendung des Teilbandschemas nach Fig. 8 im wesentlichen im Frequenzbereich oberhalb von 2 kHz genutzt werden, wobei im Bereich bis 8 kHz Teilbänder gleicher absoluter Breite von 500 Hz zugrundegelegt sind. In Abweichung hiervon bezieht sich die Frequenzselektivität des menschlichen Gehörs und damit auch die spektrale Maskierung auf konstante relative Bandbreiten, den sogenannten Frequenzgruppen. Die in dem vorliegenden Teilbandschema nach Fig. 8 gewählten absolut konstanten Bandbreiten entsprechen im Bereich von 2 bis 4 kHz in etwa der Frequenzgruppenbreite und sind im Frequenzbereich oberhalb von 4 kHz wesentlich schmäler als die Frequenzgruppen des Gehörs. In diesem Bereich ist folglich eine stärkere Maskierung benachbarter Teilbandsignale zu erwarten, wie Fig. 8 schematisch zeigt.

Fig. 4 zeigt für frequenzgruppenbreites Rauschen mit den Mittenfrequenzen 250 Hz, 1 kHz und 4 kHz als maskierender Schall die Mithörschwellen. Der Pegel des maskierenden Rauschens beträgt in allen drei dargestellten Fällen L = 60 dB. Die Mithörschwellen, aufgetragen über eine logarithmische Frequenzachse weisen bei den Mittenfrequenzen von 1 kHz und 4 kHz näherungsweise dieselbe Form auf ; dagegen ist der Verlauf bei der Mittenfrequenz von 250 Hz deutlich verbreitert. Obwohl der Pegel des Störrauschens konstant gewählt wurde, ist die Differenz des Maximums der Mithörschwelle nur gestrichelt eingetragen (60 dB-Linie bei 250 Hz nur etwa 2 dB, bei 4 kHz wächst die Differenz jedoch auf 5 dB an). Desweiteren steigen die Mithörschwellen an der unteren Flanke mit etwa 100 dB/Oktave sehr steil an und fallen nach hohen Frequenzen hin wesentlich flacher ab. Dies bedeutet, daß tiefe laute Töne hauptsächlich höhere leise Töne verdecken.

Die Steilheit der oberen Flanke ist vom Pegel des maskierenden Schalles abhängig. Diese Abhängigkeit ist in Fig. 5 dargestellt. Bei kleinen Pegeln fallen die Mithörschwellen zu höheren Frequenzen hin steil ab, während bei mittleren Pegeln und noch ausgeprägter bei hohen Pegeln der Abfall flacher wird. Dieser Abfall beträgt bei einem Pegel von 70 dB etwa 40 dB/Oktave. Die Frequenzabhängigkeit der Mithörschwelle ist also zusätzlich vom Pegel des Störschalles abhängig.

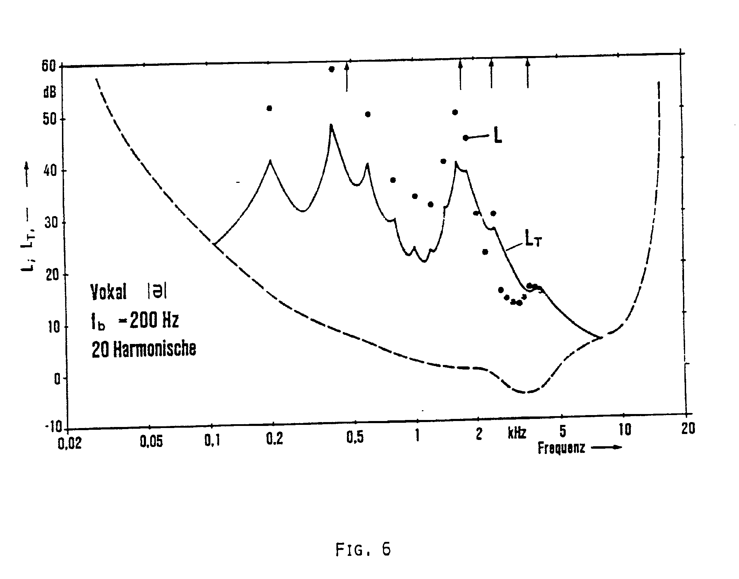

Typischerweise bestehen die zu übertragenden Signale nicht nur aus einem einzigen Ton, sondern aus einer Vielzahl von Harmonischen (z.B. Musikinstrument, stimmhafte Sprachlaute), oder breitbandigem Rauschen (z.B. Zischlaute). Je nach Zusammensetzung der Amplituden dieser Harmonischen sind die von solchen Signalen hervorgerufenen Mithörschwellen sehr verschieden. So verursacht eine Trompete mit vielen Harmonischen eine viel breitbandigere Verdeckung als eine Flöte, deren Ton ein Spektrum besitzt, das fast nur aus einer einzigen Linie besteht. Fig. 6 zeigt z.B. die Mithörschwellen des Vokals / ∂ /. Der Pegel der einzelnen Harmonischen ist durch die schwarzen Punkte markiert, die resultierende Mithörschwelle durch die ausgezogene Linie angedeutet. Trotz gegenseitiger teilweiser Maskierung sind die ersten neun Harmonischen wahrnehmbar, während die 10. und 11. Harmonische vor allem durch die 8. Harmonische verdeckt sind. Die Harmonischen Nr. 13 bis Nr. 17 sind aufgrund ihrer schwachen Pegel durch die relativ starke 12. Harmonische maskiert.

Die spektrale Verdeckung eines beliebigen Schallsignals kann in dem Block 5.1 (Fig. 3) folgendermaßen berechnet werden (Einzelheiten zur Berechnung der Mithörschwellen sind in der Literaturstelle "Algorithm for Extraction of Pitch and Pitch Salience from Complex Tonal Signals" ; Terhardt, E., Stoll, G., Seewann, M. ; J. Acoust. Soc. Am 71, 1982, pp 679-688, beschrieben).

$$L_{RHS_i}(f_{ui}) =$$

$$= \left\{ 3,64 \, (f_{ui}/kHz)^{-0,8} - 6,5 \, \exp\left[-0,6(f_{ui}/kHz \cdot 3,3)^2\right] + 10^{-3} \, (f_{ui}/kHz)^4 \right\} \quad [dB] \quad (3)$$

Dabei bedeutet

$$L_{RHS_i}$$

die Ruhehörschwelle des i-ten Teilbandes, welche tabellarisch an den Grenzfrequenzen $f_{ui}$, des Teilbandes i vorliegt.

Für die Tonheit z als Maß für die Frequenzgruppe des Gehörs gilt :

$$z = \{13 \, arc \, tan \, [0,76 \, (f/kHz)] + 3,5 \, arc \, tan \, (f/7,5 \, kHz)^2\} \, [Bark] \quad (4)$$

wobei z ebenfalls tabellarisch vorliegt.

Für die Steilheit S der unteren Flanke der Mithörschwelle gilt :

$$S = 27 \text{ dB/Bark} \quad (5)$$

Für die Steilheit S der oberen Flanke der Mithörschwelle gilt :

$$S = [-24 - (0,23 \text{ kHz}/f_{ol}) + (0,2 \cdot L_l/\text{dB})] \text{ [dB/Bark]} \quad (6)$$

wobei $f_{ol}$ die obere Grenzfrequenz und $L_l$ der Signalpegel des betreffenden Teilbandes i bedeuten.

Für die Erregungsverteilung innerhalb des Teilbandes i, welche die Grundlage für die spektrale Verdeckung darstellt, gilt :

$$L_{Ek} (f_{ul}) = L_k - S (z_k - z_i) \quad (7)$$

Die Gleichung (7) beschreibt die Verdeckung eines Teilbandes k auf ein Teilband i. Die gesamte gegenseitige Maskierung aus den verschiedenen Teilbandsignalen ergibt sich aus der Summation der Amplituden der Erregungsverteilung innerhalb der einzelnen Teilbänder. Die Maskierung des Signalpegels $L_i$ innerhalb des Teilbandes i aufgrund der Signale in allen anderen 23 Teilbändern errechnet sich zu :

$$LX_i = L_i - 10 \lg \left[ \left( \sum_{\substack{k=1 \\ i \neq k}}^{24} 10^{L_{Ek}(f_{ui})/20 \text{dB}} \right)^2 + 10^{L_{TH}(f_{ui})/10 \text{dB}} \right] + 6 \text{ dB} \quad (8)$$

Ein Teilbandsignal mit dem Signalpegel $L_l$ ist dann vollständig verdeckt, wenn $LX_l < 0$dB ist. Eine teilweise Maskierung findet statt, wenn

$$L_l > LX_l > 0 \text{ dB} \quad (9)$$

ist.

Zeitliche Mithörschwellen

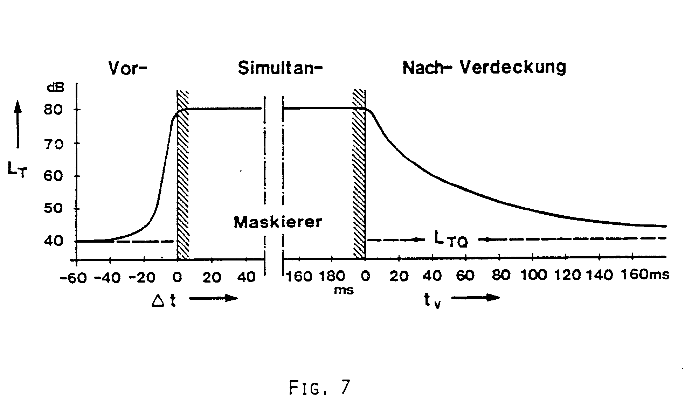

Die Verteilung der Quantisierung auf die verschiedenen Teilbänder erfolgt nicht nur in Abhängigkeit der spektralen, sondern auch der zeitlichen Verdeckung. Drei Zeitbereiche der Verdeckung, die in Fig. 7 dargestellt sind, können unterschieden werden. Die Vorverdeckung findet in einem Zeitbereich statt, bevor der Maskierer eingeschaltet ist. Wenn Maskierer und Testschall zur gleichen Zeit eingeschaltet sind, spricht man von Simultanverdeckung. Nach Abschalten des Maskierers findet eine Nachverdeckung statt.

Die typische Dauer der Vorverdeckung liegt im Bereich von 10 ms bis 20 ms. Pegelanstiege müssen in dieser relativ kurzen Zeit voll rekonstruiert werden.

Die Simultanverdeckung ist bei kurzen Testschallimpulsen von der Impulsdauer T abhängig ; bei längeren Impulsdauern ist die Mithörschwelle unabhängig von der Dauer. Bei Verkürzung der Impulsdauer (T < 200 ms) steigt die Mithörschwelle mit einer Steigung von – 10 dB/Dekade an.

Die Nachverdeckung ersteckt sich bis etwa 200 ms nach Ausschalten des Maskierers. Die Nachhörschwellen halten innerhalb der ersten 5 ms nach Abschalten den Wert der Simultanhörschwelle und erreichen nach 200 ms den Wert der Ruhehörschwelle. Der Effekt der Nachverdeckung spielt aufgrund seiner Dauer eine viel wesentlichere Rolle als der Effekt der Vorverdeckung. Die Nachverdeckung ist außerdem von der Einschaltdauer des Maskierers abhängig. Bei sehr kurzer Dauer des Maskierers (T < 5 ms) fällt die Nachhörschwelle bereits nach 20 ms auf den Wert der Ruhehörschwelle ab.

Anwendung der Mithörschwellen

Die spektralen und zeitlichen Verdeckungseigenschaften werden in dem senderseitigen Transcoder 2 gemäß Fig. 1a genutzt, um die Signale derjenigen Teilbänder, welche durch benachbarte Teilbandsignale nicht oder nur wenig verdeckt werden, feiner zu quantisieren, als solche Signale, welche sehr stark verdeckt sind und somit auch kaum wahrnehmbar sind. Signale in Teilbändern, die vollkommen verdeckt sind, d.h. unterhalb der resultierenden Mithörschwelle liegen, brauchen nicht übertragen zu werden. Das Signal des betreffenden Teilbandes kann zu Null gesetzt werden. Um das transcodierte Signal empfangsseitig in der Stufe 12 decodieren zu können (Fig. 2a) muß die in der Stufe 5 erzeugte Steuerinformation an der Stufe 12 vorliegen. Um eine Mitübertragung dieser Steuerinformation zu vermeiden, werden als Eingangsinformation der Stufe 5 die Skalenfaktoren die einzelnen Teilbänder benutzt, welche ohnehin als Nebeninformation im Multiplexsignal übertragen werden. Damit ist für den empfangsseitigen inversen Transcoder 12 allein aufgrund der Kenntnisse über die Skalenfaktoren der einzelnen Teilbänder der und unter Einbeziehung der gleichen Kriterien für die resultierende Mithörschwelle wie in der senderseitigen Stufe 5 eine genaue Zuweisung der Rückquantisierung in die Ebene mit linearer Quantisierung (z.B. 16 bis 18 bit Auflösung pro Abtastwert) möglich.

Berücksichtigung der Aliasing-Verzerrungen

Unabhängig von der gegenseitigen Verdeckung benachbarter Teilbänder muß zur Verteilung der Quantisierung innerhalb der Teilbänder auch die Wahrnehmbarkeit von Aliasing-Verzerrungen berücksichtigt werden. Diese Verzerrungen entstehen durch die nicht ideale Bandpaßfilterung der QMF-Filterbank 1, deren Ausgangssignal gerade mit der für ein ideales Filter minimal möglichen Abtastfrequenz der zweifachen Bandbreite abgetastet wird. Die in den Durchlaßbereich eines Filters der Filterbank 1 gefalteten Aliasing-Komponenten werden jedoch aufgrund der QMF-Filterstruktur der Bank 1 nur bei gleicher Auflösung des Signals in benachbarten Bandpässen praktisch vollständig eliminiert. In dem gewählten Teilbandschema gemäß Fig. 8 sind Aliasing-Verzerrungen bezüglich ihrer Wahrnehmbarkeit besonders im Bereich der unteren sechs Teilbänder kritisch, da die Bandbreiten der verwendeten Quadrature-Mirror-Filter größer als die Breite einer Frequenzgruppe sind (vgl. Fig. 8). Im Bereich hoher Frequenzen sind die Aliasing-Verzerrungen weit unkritischer, da sie aufgrund der wesentlich geringeren Breite der betreffenden Teilband-Quadrature-Mirror-Filter gegenüber den Frequenzgruppen eine stärkere Maskierung durch das Nutzsignal erfahren.

Um die Hörbarkeit von Aliasing-Verzerrungen zu vermeiden, müssen die Höhen der Quantisierungsstufen in den unteren Teilbändern zwischen benachbarten Bändern möglichst ähnlich gewählt werden, während bei den oberen Teilbändern größere Unterschiede in den Höhen der Quantisierunasstufen zwischen benachbarten Teilbändern auftreten dürfen.

Pufferspeicher

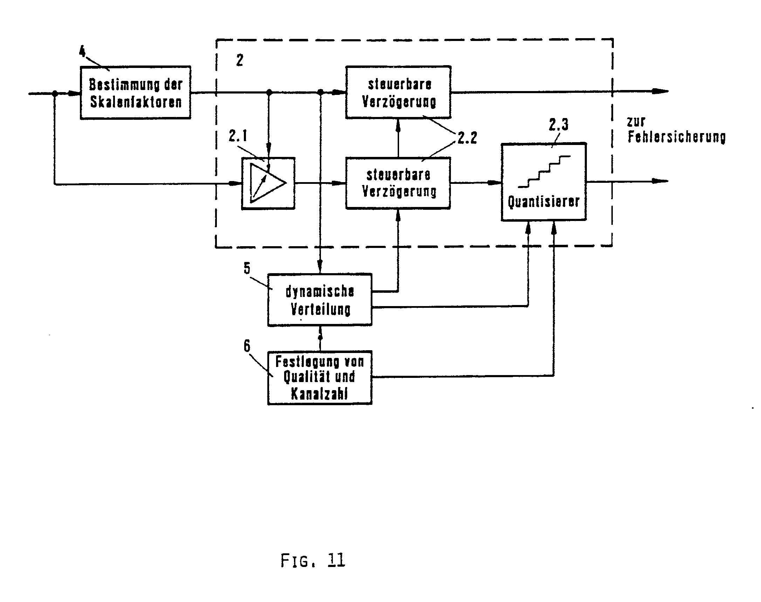

Für die zusätzliche Einsparung am Informationsfluß werden sende- und empfangsseitig in den Transkodierern 2 und 12 Pufferspeicher für die einzelnen Teilbandsignale benötigt, wie später anhand von Fig. 11 noch näher erläutert wird. Derartige Pufferspeicher ermöglichen es, die Signale in etwa der Zeitdauer, wie sie den Nachhörschwellen des menschlichen Gehörs entspricht, zu verzögern.

Eine Verzögerung des Tonsignals um einen Wert zwischen 200 ms und 500 ms ist einerseits den zeitlichen Mithörschwellen des Gehörs optimal angepaßt und andererseits für die Anwendung in der Praxis gut zu vertreten. Diese Verzögerung des Signals ist notwendig, um eine effiziente Verteilung des Informationsflusses nicht nur auf die verschiedenen Teilbandsignale, sondern auch auf die zeitlichen Blöcke, für welche jeweils ein Skalenfaktor bestimmt wurde, zu gewährleisten. Die innerhalb des Zeitfensters variable Aufteilung des Informationsflusses gewinnt vor allem bei der Berücksichtigung der zeitlichen Mithörschwellen an Bedeutung. So können schnelle Pegelanstiege der Teilbandsignale sehr genau, schnelle Pegelabsenkungen, welche durch die relativ langsam abfallenden Nachhörschwellen eine starke Maskierung erfahren, hinreichend genau transkodiert werden. Die zeitliche Verteilung der Quantisierung erfolgt hierbei ebenso wie die spektrale Verteilung auf die einzelnen Teilbänder nach Maßgabe des Mithörschwellenkriteriums, wobei in Stufe 5.5 gemäß Fig. 3 berücksichtigt wird, daß ein minimaler "mask-to-noise" Abstand gehalten wird. Dies kann beispielsweise dadurch erreicht werden, indem vom Pufferspeicher ein Steuersignal mit Information über den Ladezustand des Pufferspeichers an Stufe 5.5 übergeben wird.

Fehlersicherung der transkodierten Teilbandsignale

Die in der Stufe 7 (Fig. 1a) erfolgende Sicherung der Abtastwerte gegenüber Übertragungsfehlern kann aus folgenden Gründen stark vereinfacht werden :

Die Störwirkungen von fehlerhaft empfangenen Abtastwerten erstrecken sich nicht auf die gesamte Audio-Bandbreite, sondern sind auf die Breite des zugehörigen Teilbandes beschränkt. Die maximale Amplitude der Störung in dem betreffenden Teilband ist durch die Übertragung eines Skalenfaktors in ihrer Höhe beschränkt. Dies bedeutet, daß die spektrale Verteilung fehlerhaft empfangener Abtastwerte sich der spektralen Grobstruktur des Nutzsignals annähert und somit eine größtmögliche Verdeckung bei Störungen durch Übertragungsfehler von Abtastwerten resultiert.

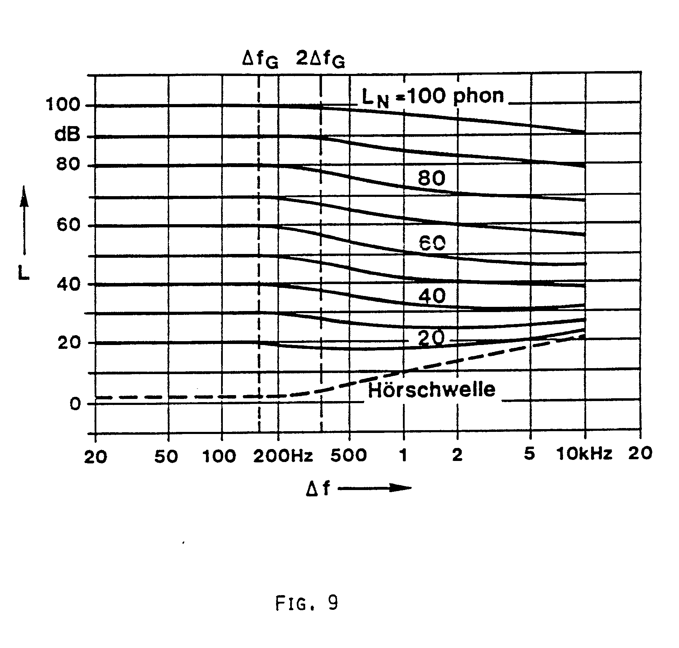

Da bei bandpassbegrenztem Rauschen mit konstantem Pegel eine Lautstärkeabhängigkeit von der Bandbreite besteht, ist es zweckmäßig, Störungen in Teilbändern mit Bandbreiten, die größer sind als die Frequenzgruppen des Gehörs, eher zu vermeiden als Störungen in schmäleren Teilbändern. Ein Rauschen mit einer Bandbreite über 2 Frequenzgruppen erzeugt bei mittlerem Schalldruckpegel die gleiche Lautstärkeempfindung wie ein im Pegel um 3 dB angehobenes Rauschen, jedoch nur frequenzgruppenbreit (vgl. Fig. 9). Damit sich Störungen lautstärkemäßig minimal auswirken, sollte das Störspektrum auf die Breite einer Frequenzgruppe reduziert werden. Da die Bandbreite in dem vorliegenden Teilbandschema (Fig. 8) in den untersten 5 Teilbändern (das 1. Teilband erstreckt sich über insgesamt 5 Frequenzgruppen) die Frequenzgruppenbreite z.T. wesentlich überschreitet, müssen die Abtastwerte der untersten 2 Teilbänder stark und die der 3 bis 5. Teilbänder hinreichend gesichert werden.

Quadrature-Mirror-Filterung in Stufen 1 und 11

Die in den Fign. 1a und 2a dargestellten sende- und empfangsseitigen Verarbeitungsschritte sind anhand des Funktionsschemas gemäß Fig. 10 veranschaulicht.

Die mit dem digitalen Tonsignal gespeiste QMF-Filterbank 1 besteht aus einer Kaskade von Mirrorfiltern MF, welche sukzessive das Tonsignalspektrum aufteilen, im betrachteten Beispielsfalle in 24 Teilbandsignale. Jedes Mirrorfilter MF stellt einen sog. "Finite-Impulse-Response" (FIR)-Filter dar, welcher ein digitales Eingangssignal in zwei spiegelsymmetrisch zur Grenzfrequenz liegende Teilbänder zerlegt. Hierzu wird die Grenzfrequenz des Ersatz-/tiefpasses so gewählt, daß sie der halben Bandbreite des Eingangssignals entspricht.

Die Flankensteilheit der Tiefpaßcharakteristik ist proportional der Anzahl der Koeffizienten des FIR-Tiefpasses. Die Berechnung der Koeffizienten ist in der Literaturstelle "Multirate Digital Signal Processing" von Chrochiere und Rabiner, Prentice-Hall-Verlag, Englewood Cliffs, N.J., U.S.A., beschrieben. Jedes Mirrorfilter MF teilt sein Eingangssignal in zwei gleichgroße Teilbänder und halbiert dabei dessen Abtastrate, so daß die das Filter durchlaufende Informationsmenge prinzipiell unverbändert bleibt. Lediglich die Wortlänge der zwischen dem kaskadierten Filtern MF übergebenen Abtastwerte ist mit 20 bis 23 bit etwas größer als die vom Eingangssignal mit üblicherweise 16 bis 18 bis, um Rundungsfehler infolge der Kaskadierung zu eliminieren. Eine Frequenzaufteilung in 24 Bänder erfolgt bei einer Abtastrate von 32 kHz durch Teilung des Bereiches 0 bis 8 kHz in 16 Bänder zu je 500 Hz und von 8 bis 16 kHz in 8 Bänder zu je 1 kHz (vgl. Fig. 8). Hierfür sind 5 bzw. 4 kaskadierte Filter MF nötig. Die unvermeidbaren Alias-Verzerrungen als Folge der nicht unendlich steilen Flanken der Ersatz-Tiefpaß-Filtercharakteristik der Mirrorfilter MF kompensieren sich bei der Rückfilterung, falls die Quantisierung in den benachbarten Teilbändern gleich ist.

Durch die Kaskadierung wird die Qualität der Filterbank stets optimal ausgenutzt, da bei gleicher Koeffizientenzahl die zeitliche Länge des FIR-Tiefpasses und somit die Steilheit pro Hertz in späteren Kaskadenstufen zunimmt. Für die Filterung sind 64 Koeffizienten je Filter ausreichend, denn es hat sich gezeigt, daß die Steilheiten der Filterflanken nicht größer sein müssen als die maximale Steilheit der Mithörschwellenkurve.

Wird in jeder Filterstufe der gleiche Koeffizientensatz verwendet, so wird die Filtersteilheit umso größer, je geringer die Abtastrate durch vorangegangene Spektralteilungen geworden ist. In den letzten Filterkaskaden ist diese Steilheit nicht unbedingt nötig, da sie nicht an allen Bandgrenzen erreicht wird. Verwendet man daher in den letzten Filterkaskaden Filter mit weniger Koeffizienten, so verringert sich in erster Linie die Signallaufzeit, was bei einer Echtzeitanwendung, wie z.B. bei einer Rundfunkübertragung von Bedeutung ist. Um diese für das Gehör erforderliche Flankensteilheit zu erhalten, sind 16 Filterkoeffizienten in der letzten Filterkaskade ausreichend.

Bei realen Filtern ist eine Restwelligkeit vorhanden, die sich zwar nicht spürbar im Frequenzgang auswirkt (Restwelligk it ≤ 0.002 dB), jedoch bei zeitlich sehr kurzen Impulsen zu einem noch hörbaren "Filterklingeln" führen kan ies sind Nebenimpulse, die 10 ms bis 100 ms vor und nach dem Hauptimpuls mit einem Pegel von ca. – ε B gegenüber dem Nutzsignal entstehen. Um diese u.U. hörbaren Signalfehler zu vermeiden, wird das Signal vor der eigentlichen Codierung einer Hin- und Rückfilterung, nicht jedoch einer Datenreduktion unterzogen. Das durch diese Hin- und Rückfilterung entstandene Fehlersignal wird extrahiert und dem zu codierenden Originalsignal invers hinzugefügt. Die störenden Eigenschaften der Filter im Coder und Decoder sind somit ausreichend unterdrückt.

Transkodierung und Bestimmung der Skalenfaktoren in Stufen 2 und 4

In der Transkodierungsstufe 2 erfolgt eine Reduktion der Auflösung der ankommenden Teilbandsignale von 16 (18) bit bis zu 1,5 bit pro Abtastwert. Dies bedeutet eine Herabsetzung der Stufenzahl der Abtastwerte in jedem Teilband. Hierzu wird pro Teilband zunächst aus einer bestimmten Anzahl zeitlich aufeinanderfolgender Abtastwerte (= Block) der Betrag der maximalen Abtastwertes gesucht, welcher dann einem Klassierungsschema zugeordnet wird. Dieses Schema besteht aus 64 Klassen entsprechend 6 bit, welche den Dynamikumfang einer 16 bit-PCM (96 dB) in 96/64 dB = 1,5 dB pro Stufe unterteilen. Die dem maximalen Abtastwert entsprechende Stufennummer stellt den Skalenfaktor der betrachteten Folge von Abtastwerten dar. Der in Stufe 4 ermittelte Skalenfaktor wird der Transkodierungsstufe 2 zugeführt, welcher ferner von der Stufe 5 eine Information über die Anzahl der je Block erforderlichen Quantisierungsstufen (aufgrund des dort angewendeten Mithörschwellenkriteriums) sowie von der Stufe 6 eine weitere Information der die gewünschte Qualität der Quellkodierung zugeführt werden.

Wie aus Fig. 11 im einzelnen hervorgeht, weist die Stufe 2 einen regelbaren Verstärker 2.1 für die linear quantisierten Teilbandsignale auf, welcher vom Skalenfaktor aus Stufe 4 gesteuert wird. Die verstärkten Teilbandsignale durchlaufen ein steuerbares Verzögerungsglied 2.2, das für die Berücksichtigung der zeitlichen Mithörschwellen notwendig ist (vgl. Abschnitt "Pufferspeicher"). Die verstärkten und verzögerten Teilbandsignale werden in dem Quantisierer 2.3 unter der Steuerung der Stufen 5 und 6 umquantisiert.

Der durch den Skalenfaktor repräsentierte Bereich in positiver und negativer Richtung wird durch die jeweils vorgegebene Anzahl von Quantisierungsstufen unterteilt. Dies bewirkt, daß die Stufenhöhe bei kleinen Skalenfaktoren entsprechend kleinen Wertebereichen geringer und damit die Auflösung höher ist als umgekehrt bei großen Skalenfaktoren entsprechend großen Wertebereichen. Durch die Unterteilung des breitbandigen Nutzsignals in Teilbandsignale können deshalb Spektralanteile mit kleinem Pegel individuell höher aufgelöst werden, als bei einer Insgesamt-Quantisierung des breitbandigen Nutzsignals, bei der solche kleinpegeligen Spektralanteile mit begrenzter gleicher Genauigkeit aufgelöst werden wie Spektralanteile mit hohem Pegel.

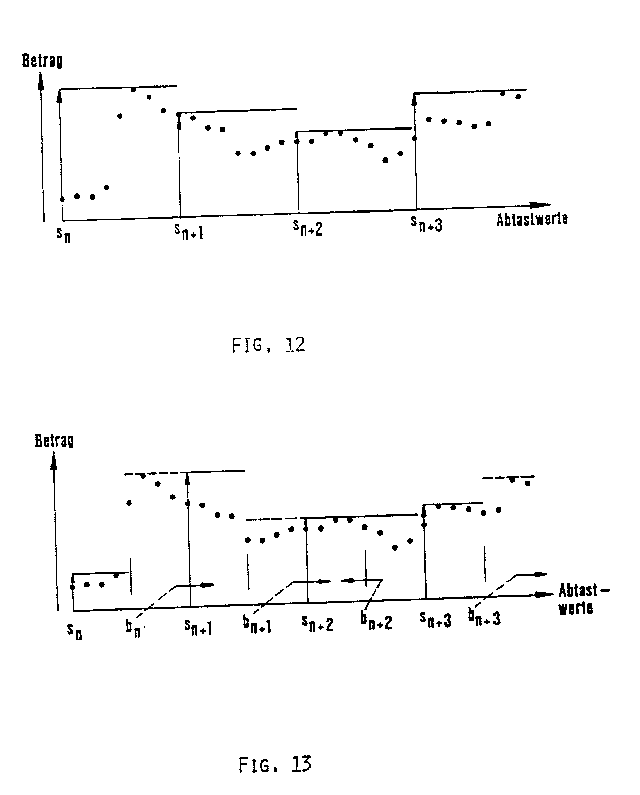

Um einerseits Pegelanstiege wegen der relativ kurzen Vorverdeckung des menschlichen Gehörs folgen zu können, andererseits den Skalenfaktor nicht zu häufig übertragen zu müssen, wird der Skalenfaktor z.B. zwar für je 4 Abtastwerte gebildet, aber nur jeder zweite Skalenfaktor übertragen. Um die nicht-übertragenen Skalenfaktoren empfängerseitig rekonstruieren zu können, wird für die den weggelassenen Skalenfaktoren zugeordneten 4er-Blöcke ein Informationsbit übertragen, welches die Gültigkeit des vorangegangenen oder des folgenden Skalenfaktors für die Skalierung des betreffenden 4er-Blocks angibt. Diese Verhältnisse sind schematisiert anhand der Fig. 12 und 13 erläutert.

In Fig. 12 ist die Skalenfaktorbildung für einen Pegelverlauf mit Blöcken zu je 8 Abtastwerten dargestellt ; Fig. 13 zeigt den gleichen Pegelverlauf mit Blöcken zu je 4 Abtastwerten, wobei nur jeder zweite Skalenfaktor zu 6 bit übertragen und ein zusätzliches Informationsbit aufgewendet wird, so daß statt 6 bit/8 Abtastwerte nunmehr 7 bit/8 Abtastwerte übertragen werden. Wie Fig. 13 zeigt, wird der zwischen den Skalenfaktoren $S_n$ und $S_{n+1}$ befindliche Pegelanstieg zeitlich exakter erfaßt als im Falle von Fig. 12. Das in Fig. 12 zwangsläufig stärkere Quantisierungsrauschen (großer Wert $S_n$) für die ersten 4 zum Skalenfaktor $S_n$ zugehörigen Abtastwerte fällt wegen des in Fig. 13 niedrigeren Skalenfaktors mit entsprechend feineren Quantisierungsschritten geringer aus. Auch bei zeitlich sehr kurzen Pegelspitzen (innerhalb eines Zeitraums von weniger als 4 Abtastwerten) wird der Pegelanstieg mit Hilfe des zusätzlichen Informationsbits (Fig. 13) zeitlich besser angenähert, wobei es auf den zugehörigen Pegelabfall wegen der wesentlich längeren Nachdeckung des menschlichen Gehörs weniger ankommt und damit auch längere "Rauschfahnen" toleriert werden können.

Skalenfaktor und zusätzliche Informationsbits werden in jedem Teilband wie folgt erzeugt, wobei zum besseren Verständnis angenommen sei, daß hier nur die Skalenfaktoren mit geradzahligem Index $S_{2n}$, $S_{2n+2}$... übertragen werden.

$$S_{2n} < S_{2n+1} < S_{2n+2} \qquad \text{nächstliegender Pegelwert}$$

$$S_{2n} < S_{2n+1} > S_{2n+2} \qquad S_{2n+2} \text{ aus } S_{2n+1}$$

$$S_{2n} > S_{2n+1} > S_{2n+2} \qquad \text{nächstliegender Pegelwert}$$

$$S_{2n} > S_{2n+1} < S_{2n+2} \qquad S_{2n+1} \text{ aus } S_{2n}$$

Um das starre Klassierungsschema für den Skalenfaktor in 1,5 dB-Stufen zu verfeinern, ist die Übertragung einer Zusatzinformation vorgesehen, die den durch diese Klassierung entstehenden Fehler minimiert. Vorgesehen ist für die Frequenzbereiche von 1,5 bis 3,5 kHz sowie von 3,5 bis 8 kHz alle 8 Abtastwerte je eine 3 bit-Zusatzinformation, welche die gesamte Abweichung vom 1,5 dB-Raster in allen auf diese beiden Frequenzbereiche entfallenden Teilbänder gemäß Fig. 8 in (1/8) · 1,5 dB-Schritten angibt. Dies kommt z.B. Einzeltönen zugute, deren Pegeländerungen mit etwa 0,2 dB Genauigkeit übertragen werden können.

Die Wahl dieser Feinrasterung soll nach Maßgabe eines minimalen quadratischen Fehlers erfolgen, so daß nur die stark modulierten Teilbänder die Feinrasterung bestimmen. Die Zusatzinformation gilt also nicht für alle Teilbänder, was folgenden Grund hat : in dem gewählten Teilbandschema gemäß Fig. 8 ist die Bandbreite der unteren drei Teilbänder bis 1,5 kHz wesentlich größer als die der Frequenzgruppen des menschlichen Gehörs, so daß die Verdeckung innerhalb dieser drei Teilbänder relativ gering ist. Es ist daher für diese drei Teilbänder eine relativ hohe Auflösung erforderlich, beispielsweise von 10,6 bit/Abtastwert für das Teilband von 0,5 bis 1 kHz. Unterhalb von 1 kHz werden die Nachteile der Klassierung für den Skalenfaktor wegen dieser relativ hohen Auflösung für diese 3 Teilbänder bedeutungslos. Oberhalb von 8 kHz wird die 1,5 dB-Klassierung als ausreichend empfunden.

Eine weitere Eigenschaft der Transkodierungsstufe 2 besteht darin, daß ein Skalenfaktor der Größe Null so verarbeitet wird, daß für alle reduzierten Abtastwert-Angaben der betreffende Block des betreffenden Teilbandsignals nicht übertragen wird. Das gleiche gilt, wenn die Stufe 5 in einem Teilband feststellt, daß der Skalenfaktor unterhalb der betreffenden Mithörschwelle liegt (gegenseitige Maskierung), worauf die Stufe 5 an die Stufe 4 den Steuerbefehl "setze den Skalenfaktor auf Null" gibt.

Ferner kann in der Stufe 4 für jedes Teilband eine zuschaltbare Rauschsperre vorgesehen werden, um Leerkanalrauschen, Ungenauigkeiten bei der A/D-Wandlung und dgl. zu unterdrücken. Hierbei ist es denkbar, einstellbare Schwellwerte vorzusehen.

Bei der Quantisierung der Stufe 2 muß eine ungerade Anzahl von Quantisierungsstufen vorgesehen werden, um zu verhindern, daß Werte nahe Null in einen ständigen Wechsel zwischen zwei Quantisierungsstufen überführt werden. Ansonsten könnten Anteile entstehen, die weit über dem Signalpegel des Teilbandes liegen. Nicht alle Stufenzahlen können direkt in digitale Werte umgewandelt werden, ohne daß man darstellbare Werte und somit Übertragungs-Kapazität verschenkt. Z.B. müßte man für die Darstellung von 3 möglichen Stufen 2 bit an Information aufwenden ; die 4. Kombinationsmöglichkeit dieser 2 bit bliebe jedoch unbenutzt und würde hier 33% mehr Aufwand an Informationsmenge bedeuten.

Derartige Verluste an Übertragungskapazität lassen sich minimieren, indem man mehrere Abtastwerte zusammen in ein Datenwort kodiert. Beispielsweise ergeben 5 Abtastwerte mit je 3 Stufen $243 = 3^5$ Kombinationsmöglichkeiten, die mit 8 bit, also 256 Zuständen bei geringer Irrelevanz und wenig Kodierungsaufwand übertragen werden können.

Zusätzliche Spektralanalyse zur Gewinnung der Steuerinformation

Ein weiteres Ausführungsbeispiel des erfindungsgemäßen Verfahrens ist in den Fign. 1d (Sendeseite) und Fig. 2d (Empfängerseite) dargestellt. Ein wesentlicher Teil der Steuerinformation für die Quantisierung der Abtastwerte wird aus dem Spektralverlauf des Tonsignals gewonnen. Um diese Information zu gewinnen, wird sendeseitig eine Fourierzerlegung des Tonsignals durchgeführt, die z.B. durch eine Fast-Fourier-Transformation realisiert werden kann. Durch diese Fourier-Transformation ergeben sich im wesentlichen die folgenden Vorteile :

— genauere Spektraldarstellung gegenüber einer Bandpaßaufteilung des Tonsignals.
— Die tonalen Anteile können von den mehr rauschhaften Bestandteilen eines Tonsignals unterschieden werden.
— Die genauere Spektralanalyse und Unterscheidung in tonale und rauschhafte Bestandteile ermöglicht eine effektivere Bestimmung der Mithörschwellen gegenüber dem Fall, daß die Steuergrößen nur aufgrund einer begrenzten Anzahl von Teilbansignalen gewonnen werden.
— Reduzierung des Hardwareaufwandes auf der Empfangsseite bei gleichzeitig kürzerer Verzögerungszeit der Tonsignalübertragung und gleicher Übertragungsrate des Multiplexsignals wie ohne diese zusätzliche Maßnahme.

Die Reduzierung des Hardwareaufwandes besteht darin, daß weniger Bandpässe verwendet werden können. Die geringere Anzahl an Bandpässen bedeutet in erster Linie einen geringeren Prozessoraufwand, was sich besonders bei der Entwicklung eines kostengünstigen Empfängers positiv auswirkt Breitere Teilbänder ermöglichen eine kürzere Gesamtverzögerungszeit des Systems. In den Fign. 1d und 2d ist der Reduzierung des Hardwareaufwandes insofern Rechnung getragen, daß statt der 24 Teilbänder in der vorigen Ausführungsform nun nur noch 16 Teilbänder gegenüberstehen. Der durch die breiteren Teilbänder grundsätzlich höhere Datenfluß der transkodierten Teilbandsignale kann durch die genauere Bestimmung der Mithörschwellen in etwa wieder kompensiert werden.

Eine ausreichende Spektralauflösung im Bereich tiefer Frequenzen des Tonsignals wäre durch eine spektrale Darstellung benachbarter Stützwerte von etwa $\Delta f = 10$ Hz gegeben. Da der entscheidende Vorteil der genauen Spektralbestimmung für die Ermittlung der Mithörschwellen im unteren Teil des Frequenzbereiches gegeben ist (22 der insgesamt 24 Frequenzgruppen des Gehörs liegen im Frequenzbereich bis 10 kHz), genügt eine Spektralanalyse bis etwa 10 kHz. Bei einer Spektraldarstellung des Amplitudenspektrums mit 512 reellen Stützwerten ergibt sich damit ein Abstand benachbarter Stützwerte von $\Delta f = 20$ Hz. Mittels geeigneter Interpolationsalgorithmen ist für diskrete tonale Komponenten eine genauere Frequenzbestimmung aufgrund der Auswertung benachbarter Frequenzstützpunkte möglich.

Die Eingangsgrößen des Blocks dynamische Verteilung des Informationsflusses (sh. Fig. 1d) bestehen zusätzlich zu den Steuergrößen aus der FFT-Analyse auch aus Steuergrößen für die Festlegung der Qualität und Kanalzahl, sowie aus den Skalenfaktoren der einzelnen Teilbänder. Durch einen Vergleich der Steuergrößen aufgrund der FFT-Analyse und den Skalenfaktoren können die Aliasing-Verzerrungen, die sich durch die unterschiedliche Quantisierung in den Teilbandsignalen empfangsseitig nicht mehr vollständig kompensieren, bei der dynamischen Verteilung des Informationsflusses ausreichend genau berücksichtigt werden.

Stufenweise Datenreduktion

In verschiedenen Anwendungsfällen des erfindungsgemäßen Verfahrens ist eine stufenweise Datenreduktion der Tonsignale vorteilhaft. Für die Übertragung hochwertiger Tonsignale zwischen zwei Studios beispielsweise muß die Datenreduktion so erfolgen, daß eine ausreichende "mask-to-noise"-Reserve gewährleistet ist, um Nachbearbeitungen ohne Qualitätseinbuße zu ermöglichen (Studioqualität, vgl. Abschnitte "Nutzung des schwankenden Informationsflusses : Erhöhter Rauschabstand" sowie "Qualitätsabstufung"). Für die weitere Verteilung und/oder Speicherung ist ein erhöhter Rauschabstand nicht erforderlich, so daß die gemäß Studioqualität codierten Tonsignale einer weitergehenden Datenreduktion unterworfen werden dürfen.

Eine vorteilhafte Ausbildung des erfindungsgemäßen Verfahrens liegt darin, daß die verschiedenen Qualitätsabstufungen der erfindungsgemäß codierten Tonsignale "abwärtskompatibel" sind, d.h., daß beispielsweise ein 192 kbit/s-Multiplexsignal mit Hilfe eines speziellen Transcoders in ein 128 kbit/s-Multiplexsignal umgesetzt werden kann, wobei die 192 kbit/s-Codierung einen erhöhten Rauschabstand (Nachbearbeitungsfähigkeit) gewährleistet und die 128 kbit/s-Codierung einen kleineren Rauschabstand und einen höheren Fehlerschutzgrad vorsieht.

Fig. 1e zeigt ein Ausführungsbeispiel eines derartigen Transcoders. Er besteht aus den Stufen 12, 13, 15, 17, 18 des Decoders gemäß Fig. 2a sowie aus den Stufen 2, 3, 5, 7, 8 des Coders gemäß Fig. 1a. Er ist dadurch gekennzeichnet, daß das 192 kbit/s-codierte Tonsignal nicht vollständig zurückgewonnen und neu codiert wird, sondern daß die Nebeninformationen (Skalenfaktoren), welche aus dem Originalsignal gewonnen sind, für die neue Codierung im rechten Teil des Transcoders (Stufen 2, 3, 5, 7, 8) zugrunde gelegt werden. Dadurch wird eine Verminderung des Rauschabstandes durch Kaskadierung vermieden. Da die Rückfilterung und Hinfilterung (Stufen 11 und 1 in Fign. 2a bzw. 1a) entfallen, ist die durch den Transcoder gemäß Fig, 1e verursachte Verzögerungszeit klein (etwa 4 ms).

**Patentansprüche**

1. Verfahren zum Übertragen oder Speichern digitalisierter Tonsignale, bei dem sende- bzw. produktionsseitig

a) das Tonsignal durch eine Vielzahl spektraler Teilbandsignale digital dargestellt wird, wobei für jedes Teilbandsignal zeitdiskrete, quantisierte Abtastwerte vorliegen ;

b) die Quantisierung der Abtastwerte in den einzelnen Teilbändern nach Maßgabe der jeweiligen Mithörschwellen des menschlichen Gehörs im Sinne einer Informationsreduktion geändert (codiert) wird, wobei die Höhe des für die Übertragung oder Speicherung aller codierter Teilbandsignale erforderlichen Gesamtinformationsflusses in Abhängigkeit der spektralen und zeitlichen Struktur des Tonsignals schwankt, und

c) die codierten Teilbandsignale übertragen oder gespeichert werden, und bei dem wiedergabeseitig

d) die codierten Teilbandsignale decodiert werden, und

e) die decodierten Teilbandsignale zu einem breitbandigen digitalen Tonsignal zusammengefügt werden, **dadurch gekennzeichnet,** daß nach Maßgabe der Pegelwerte jedes Teilbandsignals oder davon abgeleiteter Pegelinformationen die Quantisierung der Abtastwerte in den Teilbändern Dahingehend gesteuert wird, daß die Quantisierungsrauschpegel der einzelnen Teilbandsignale näherungsweise gleiche Abstände zu der aus einzelnen Teilbandsignalen resultierenden Mithörschwelle aufweisen, und daß die Abstände der Quantisierungsrauschpegel der Teilbandsignale zu der resultierenden Mithörschwelle durch die Differenz zwischen dem erforderlichen Gesamtinformationsfluß und dem für die Codierung verfügbaren Gesamtinformationsfluß festgelegt sind.

2. Verfahren nach Anspruch 1, dadurch gekennzeichnet, daß die Höhe des verfügbaren Gesamtinformationsflusses variabel ist, ggf. auch etwa gleich dem erforderlichen Gesamtinformationsfluß ist, und wiedergabeseitig eine entsprechende Anpassung der Decodierung erfolgt.

3. Verfahren nach Anspruch 1 und 2, dadurch gekennzeichnet, daß die Quantisierungsrauschpegel der Teilbandsignale unterhalb oder oberhalb der resultierenden Mithörschwelle liegen.

4. Verfahren nach einem der Ansprüche 1 bis 3, dadurch gekennzeichnet, daß Teilbandsignale, welche die Klangfarbe des Tonsignals nur geringfügig beeinflussen und deren Pegelwerte oberhalb der resultierenden Mithörschwelle liegen, zu Null gesetzt werden, falls die Quantisierungsrauschpegel der Teilbandsignale oberhalb der resultierenden Mithörschwelle liegen.

5. Verfahren nach Anspruch 4, dadurch gekennzeichnet, daß nur soviele Teilbänder zu Null gesetzt werden, wie erforderlich ist, um den Quantisierungsrauschpegel der Teilbandsignale soweit zu reduzieren, daß er gerade unterhalb der resultierenden Mithörschwelle liegt.

6. Verfahren nach Anspruch 5, dadurch gekennzeichnet, daß diejenigen Teilbänder zu Null gesetzt werden, welche die größere absolute Bandbreite aufweisen.

7. Verfahren nach einem der Ansprüche 1 bis 6, dadurch gekennzeichnet, daß die Höhe des Informationsflusses eines codierten Nutzsignals stufenweise etwa um den ganzzahligen Faktor n reduziert wird und stattdessen n − 1 zusätzliche Nutzsignale übertragen werden.

8. Verfahren nach Anspruch 1, dadurch gekennzeichnet, daß die resultierende Mithörschwelle nach Maßgabe der Pegelwerte in jedem Teilband unter Berücksichtigung der Gesetzmäßigkeiten für die Vor-, Simultan- und Nachverdeckung gewonnen wird.

9. Verfahren nach Anspruch 8, dadurch gekennzeichnet, daß die Berücksichtigung der zeitlichen Mithörschwellen nach Maßgabe der innerhalb eines Zeitfensters von etwa 500 ms vorliegenden Teilband-Pegelwerte erfolgt.

10. Verfahren nach Anspruch 1, dadurch gekennzeichnet, daß Teilbandsignale, deren Pegelwerte unterhalb der resultierenden Mithörschwelle liegen, nicht oder nur mit geringer Auflösung codiert werden.

11. Verfahren nach Anspruch 1, dadurch gekennzeichnet, daß die Höhe der Quantisierungsstufen der Teilbandsignale so bemessen ist, daß die bei der Aufteilung des digitalisierten Tonsignals in Teilbandsignale entstehenden Aliasing-Verzerrungen unterhalb der Mithörschwelle des menschlichen Gehörs liegen.

12. Verfahren nach Anspruch 1, dadurch gekennzeichnet, daß
— sendeseitig für jedes digitalisierte Teilbandsignal ein Skalenfaktor bestimmt wird, welcher den Spitzenwert des Teilbandsignalpegels innerhalb eines bestimmten Zeitintervalls klassiert ;
— bei der Codierung jedes Teilbandsignals dessen Auflösung nach Maßgabe des ermittelten Skalenfaktors festgelegt wird ;
— die ermittelten Skalenfaktoren zusammen mit den codierten Teilbandsignalen übertragen werden, und
— die übertragenen Skalenfaktoren bei der Decodierung der empfangenen codierten Teilbandsignale zur Rekonstruktion des ursprünglichen Teilbandsignals verwendet werden.

13. Verfahren nach Anspruch 12, dadurch gekennzeichnet, daß die Anzahl der Klassierungsstufen bei der Skalenfaktorbestimmung so gewählt ist, daß die Wahrnehmbarkeitsschwelle für Pegelsprünge innerhalb des zugeordneten Teilbandes unterschritten ist.

14. Verfahren nach Anspruch 12 oder 13, dadurch gekennzeichnet, daß das Zeitintervall zur Klassierung des Spitzenwertes des jeweiligen Teilbandsignales entsprechend der zeitlichen Verdeckung des menschlichen Gehörs und entsprechend der zeitlichen Struktur des Teilbandsignals innerhalb des zugeordneten Teilbandes bestimmt ist.

15. Verfahren nach einem der Ansprüche 12 bis 14, dadurch gekennzeichnet, daß für jeden aus einer Folge von Abtastwerten bestehenden Block jedes Teilbandsignales nur für die erste Blockhälfte der Skalenfaktor bestimmt wird, und daß für die zweite Blockhälfte der Skalenfaktor der ersten Hälfte desselben oder des nachfolgenden Blockes verwendet wird.

16. Verfahren nach einem der Ansprüche 1 bis 15, dadurch gekennzeichnet, daß sende- und empfangsseitig aus den Skalenfaktoren der Teilbandsignale die Steuerinformation für die Quantisierung der Abtastwerte in den Teilbändern gewonnen werden.

17. Verfahren nach einem der Ansprüche 1, 8, 9 und 16, dadurch gekennzeichnet, daß die Steuerinformationen für die Quantisierung der Abtastwerte nur sendeseitig gewonnen und für die empfangsseitige Rückquantisierung zusätzlich übertragen werden.

18. Verfahren nach Anspruch 17, dadurch gekennzeichnet, daß sendeseitig die Steuerinformationen für die Quantisierung für Abtastwerte nach Maßgabe einer ausgewählten Spektralanalyse des digitalen Tonsignals gewonnen werden.

19. Verfahren nach den Ansprüchen 1 und 12, dadurch gekennzeichnet, daß vor ihrer Übertragung die Skalenfaktoren einer höheren Fehlersicherung unterzogen werden als die transcodierten Abtastwerte der Teilbandsignale.

20. Verfahren nach Anspruch 1, 17 und 18 dadurch gekennzeichnet, daß vor ihrer Übertragung die Steuerinformationen einer höheren Fehlersicherung unterzogen werden als die transcodierten Abtastwerte der Teilbandsignale.

21. Verfahren nach Anspruch 19 und 20, dadurch gekennzeichnet, daß die Fehlersicherung der Skalenfaktoren und/oder der Steuerinformationen in Teilbändern größerer relativer Bandbreite höher ist als in Teilbändern kleinerer relativer Bandbreite.

22. Verfahren nach Anspruch 1, dadurch gekennzeichnet, daß die transcodierten Abtastwerte in den Teilbändern einer Fehlersicherung unterworfen werden, derart, daß in Teilbändern größerer relativer Bandbreite ein höherer Fehlerschutz besteht als in Teilbändern kleinerer relativer Bandbreite.

23. Verfahren nach einem der Ansprüche 1 und 19 bis 22, dadurch gekennzeichnet, daß die Informationsmenge für den Fehlerschutz (Fehlerschutzgrad) nach Maßgabe der spektralen und zeitlichen Struktur des digitalen Tonsignals bemessen wird, derart, daß

— für Tonsignale, welche für die Übertragung einen geringen Gesamtinformationsfluß benötigen, ein hoher Fehlerschutzgrad vorgesehen wird, und

— für Tonsignale, welche für die Übertragung einen hohen Gesamtinformationsfluß benötigen, ein geringer Fehlerschutzgrad vorgesehen wird.

24. Verfahren nach Anspruch 23, dadurch gekennzeichnet, daß der signalabhängige Fehlerschutzgrad so bemessen wird, daß die durch Bitfehler verursachte subjektive Störung für wenig verdeckende Tonsignale nicht größer ist als für stark verdeckende Tonsignale.

25. Verfahren nach Anspruch 1, dadurch gekennzeichnet, daß bei Unterschreitung eines Pegelschwellwertes eines Teilbandsignales dessen Abtastwerte nicht transcodiert werden.

26. Verfahren nach einem der Ansprüche 4 bis 6 und 12 bis 16, dadurch gekennzeichnet, daß der Skalenfaktor eines Teilbandes die Information darüber enthält, daß die Abtastwerte dieses Teilbandes innerhalb eines Blockes Null betragen und nicht übertragen werden.

## Claims

1. Method for the transmitting or storing of digitalised audio signals in which at the transmitter and at the producer respectively

a) the audio signal is represented digitally by a plurality of spectral sub-band signals whereby for each sub-band signal time discrete, quantized sample values are present ;

b) the quantizing of the sample values in the individual sub-bands according to the respective masking thresholds of the human auditory system in the sense of a reduction of information is changed (coded) whereby the level of the total information flow required for the transmission or storage of all coded sub-band signals fluctuates in dependence on the spectral and time structure of the audio signal and

c) the coded sub-band signals are transmitted or stored and in which in the reproducer

d) the coded sub-band signals are decoded and

e) the coded sub-band signals are combined to form a broadband digital audio signal, characterised in that according to the level values of each sub-band signal or level information derived therefrom the quantizing of the sample values in the sub-bands is controlled to the effect that the quantizing noise levels of the individual sub-band signals have approximately equal distances to the masking threshold resulting from individual sub-band signals and that the distances of the quantizing noise level of the sub-band signals to the resulting masking threshold are determined by the difference between the required total information flow and the total information flow available for the coding.

2. Method according to claim 1, characterised in that the magnitude of the available total information flow is variable and also almost equal to the required total information flow and at the reproducer a corresponding adaptation of the decoding takes place.

3. Method according to claim 1 and 2, characterised in that the quantizing noise level of the sub-band signals lie below or above the resulting masking threshold.

4. Method according to one of the claims 1 to 3, characterised in that sub-band signals which only slightly influence the tonality of the audio signal and the level values of which lie above the resulting masking threshold are set to zero if the quantizing noise levels of the sub-band signals lie above the resulting masking threshold.

5. Method according to claim 4, characterised in that only so many sub-bands are set to zero as is necessary in order to reduce the quantizing noise level of the sub-band signals so far that it lies just below the resulting masking threshold.

6. Method according to claim 5, characterised in that these sub-bands are set to zero which have the greater

EP 0 290 581 B1

absolute bandwidth.

7. Method according to one of the claims 1 to 6, characterised in that the magnitude of the information flow of a coded useful signal is reduced stepwise approximately by the whole number factor n and instead n − 1 additional useful signals are transmitted.

8. Method according to claim 1, characterised in that the resulting masking threshold is obtained according to the level value in each sub-band taking into consideration the natural effects for pre-masking, simultaneous masking and post-masking.

9. Method according to claim 8, characterised in that the taking into consideration of the temporal masking is effected according to the sub-band level values present within a time window of about 500 ms.

10. Method according to claim 1, characterised in that sub-band signals whose level values lie below the resulting masking threshold are not coded or are coded only with low resolution.

11. Method according to claim 1, characterised in that the magnitude of the quantizing steps of the sub-band signals is so dimensioned that the aliasing distortions arising during the division of the digitalized audio signal into sub-band signals lie below the masking threshold of the human auditory system.

12. Method according to claim 1, characterised in that,
— at the transmitter for each digitalized sub-band a scale factor is determined which classifies the peak value of the sub-band signal level within a defined time interval ;
— in the coding of each sub-band signal the resolution of which is determined according to the ascertained scale factor ;
— the ascertained scale factors are transmitted together with the coded sub-band signals and
— the transmitted scale factors in the decoding of the received coded sub-band signals are used for the reconstruction of the original sub-band signal.

13. Method according to claim 12, characterised in that the number of classification steps in the determination of the scale factor is selected such that the perceptibility threshold for level changes within the associated sub-band is not exceeded.

14. Method according to claim 12 or 13, characterised in that the time interval for the classification of the peak value of the respective sub-band signal is determined according to the temporal masking of the human auditory system and corresponding to the temporal structure of the sub-band signal within the associated sub-band.

15. Method according to one of the claims 12 to 14, characterised in that for each block of each sub-band signal consisting of a sequence of sample values the scale value is determined only for the first block half and that for the second block half the scale factor of the first half of same or of the subsequent block is employed.

16. Method according to one of the claims 1 to 15, characterised in that at the transmitter and at the receiver the control information for the quantization of the sample values in the sub-bands is obtained from the scale factors of the sub-band signals.

17. Method according to one of the claims 1, 8, 9 and 16, characterised in that the control information for the quantization of the sample values are obtained only at the remitter and are transmitted additional for the receiver side return quantization.

18. Method according to claim 17, characterised in that at the transmitter the control information for the quantization of the sample values is obtained according to a selected spectral analysis of the digital audio signal.

19. Method according to claims 1 and 12, characterised in that before their transmission the scale factors are subjected to a greater error protection than the transcoded sample values of the sub-band signals.

20. Method according to claims 1, 17 and 18, characterised in that before its transmission the control information is subjected to a greater error protection than the transcoded sample values of the sub-band signals.

21. Method according to claim 19 and 20, characterised in that the error protection of the scale factors and/or of the control information in sub-bands of greater relative bandwidth is higher than in sub-bands of smaller relative bandwidth.

22. Method according to claim 1, characterised in that the transcoded sample values in the sub-bands are subjected to an error protection such that in sub-bands of greater relative bandwidth there is a greater error protection than in sub-bands of smaller relative bandwidth.

23. Method according to one of the claim 1 and 19 to 22, characterised in that the quantity of information for the error protection (degree of error protection) is dimensioned according to the spectral and temporal structure of the digital audio signal such that
— for audio signals which require for the transmission a low total information flow a high degree of error protection is provided and
— for audio signals which require for the transmission a high total information flow a low degree of error protection is provided.

20

24. Method according to claim 23, characterised in that the signal dependent degree of error protection is so dimensioned that the subjective interference caused by bit errors is no greater for slightly masked audio signals than for strongly masked audio signals.

25. Method according to claim 1, characterised in that upon falling below a level threshold value of a subband signal the sample values are not transcoded.

26. Method according to one of the claims 4 to 6 and 12 to 16, characterised in that the scale factor of a sub-band contains the information that the sample values of this sub-band within a block amount to zero and are not transmitted.

**Revendications**

1. Procédé pour transmettre ou mémoriser des signaux audio numérisés, selon lequel, côté émission ou côté production

a) on représente le signal audio sous forme numérique par un grand nombre de signaux de bandes spectrales partielles, en utilisant pour chaque signal de bande partielle des échantillons quantifiés, discrets dans le temps ;

b) on change (code) la quantification des échantillons dans les différentes bandes partielles selon les seuils d'audibilité correspondants de l'ouïe humaine dans le sens d'une réduction de l'information, avec variation du débit du flux d'information total nécessaire à la transmision ou la mémorisation de tous les signaux de bandes partielles codées, en fonction de la structure spectrale et temporelle du signal audio, et

c) on transmet ou mémorise les signaux de bandes partielles codés, et selon lequel, côté reproduction,

d) on décode les signaux de bandes partielles codés et

e) on rassemble les signaux de bandes partielles décodes en un signal audio numérique à large bande, caractérisé en ce que, selon les niveaux de chaque signal de bande partielle ou selon des informations de niveau qui en dérivées, on commande la quantitification des échantillons dans les bandes partielles de manière que les niveaux de bruit de quantification des différents signaux de bandes partielles présentent approximativement les mêmes espacements par rapport au seuil d'audibilité résultant de différents signaux de bandes partielles, et que les espacements des niveaux de bruit de quantification des signaux de bandes partielles par rapport au seuil d'audibilité résultant, soient fixés par la différence entre le flux d'information total nécessaire et le flux d'information total disponible pour le codage.

2. Procédé selon la revendication 1, caractérisé en ce que le débit du flux d'information total disponible est variable et est éventuellement à peu près égal au flux d'information total nécessaire, et que l'on effectue une adaptation correspondante du décodage côté reproduction.

3. Procédé selon les revendications 1 et 2, caractérisé en ce que les niveaux de bruit de quantification des signaux de bandes partielles sont inférieurs ou supérieurs au seuil d'audibilité résultant.

4. Procédé selon une des revendications 1 à 3, caractérisé en ce que l'on met à zéro les signaux de bandes partielles n'influençant que peu la tonalité du signal audio et dont les niveaux sont supérieurs au seuil d'audibilité résultant, au cas où les niveaux de bruit de quantification des signaux de bandes partielles sont supérieurs au seuil d'audibilité résultant.

5. Procédé selon la revendication 4, caractérisé en ce que l'on met seulement à zéro le nombre de bandes partielles nécessaire pour réduire le niveau de bruit de quantification des signaux de bandes partielles au point qu'il se trouve juste au-dessous du seuil d'audibilité résultant.

6. Procédé selon la revendication 5, caractérisé en ce que l'on met à zéro les bandes partielles ayant la plus grande largeur de bande absolue.

7. Procédé selon une des revendications 1 à 6, caractérisé en ce que l'on réduit le débit du flux d'information d'un signal utile codé par paliers, à peu près d'un facteur n correspondant à un nombre entier, et on transmet, à la place, n − 1 signaux utiles supplémentaires.

8. Procédé selon la revendication 1, caractérisé en ce que l'on obtient le seuil d'audibilité résultant, selon les niveaux dans chaque bande partielle, en tenant compte des lois régissant le pré-masquage, le masquage simultané et le post-masquage.

9. Procédé selon la revendication 8, caractérisé en ce que l'on tient compte des seuils d'audibilité dans le temps selon les niveaux de bande partielle se trouvant à l'intérieur d'une fenêtre de temps de 500 ms environ.

10. Procédé selon la revendication 1, caractérisé en ce que l'on ne code pas ou l'on code seulement avec une faible résolution les signaux de bandes partielles dont les niveaux sont inférieurs au seuil d'audibilité résultant.

11. Procédé selon la revendication 1, caractérisé en ce que l'on ajuste la hauteur des échelons de quantification des signaux de bandes partielles de manière que les distorsions par repliement, provoquées à la répartition du signal audio numérisé en signaux de bandes partielles, soient inférieures au seuil d'audibilité de l'ouie humaine.

12. Procédé selon la revendication 1, caractérisé en ce que

— côté émission, on détermine pour chaque signal de bande partielle numérisé, un facteur d'échelle qui classe la valeur de crête du niveau du signal de bande partielle à l'intérieur d'un intervalle de temps déterminé ;

— lors du codage de chaque signal de bande partielle, on fixe sa résolution selon le facteur d'échelle déterminé ;

— on transmet les facteurs d'échelle déterminés, ensemble avec les signaux de bandes partielles codés et

— lors du décodage des signaux de bandes partielles codés reçus, on utilise les facteurs d'échelle transmis pour reconstituer le signal de bande partielle original.

13. Procédé selon la revendication 12, caractérisé en ce que l'on choisit le nombre de catégories de classement, pour déterminer le facteur d'échelle, de manière que l'on reste au-dessous au seuil de perceptibilité de sauts de niveau à l'intérieur de la bande partielle coordonnée.

14. Procédé selon la revendication 12 ou 13, caractérisé en ce que l'on détermine l'intervalle de temps pour le classement de la valeur de crête du signal de bande partielle concerné en conformité avec le masquage dans le temps de l'ouie humaine et en conformité avec la structure temporelle du signal de bande partielle à l'intérieur de la bande partielle coordonnée.

15. Procédé selon une des revendications 12 à 14, caractérisé en ce que, pour chaque bloc formé d'une suite d'échantillons de chaque signal de bande partielle, on détermine le facteur d'échelle pour la première moitié seulement du bloc et que, pour la deuxième moitié du bloc, on utilise le facteur d'échelle de la première moitié du même bloc ou celui du bloc suivant.

16. Procédé selon une des revendications 1 à 15, caractérisé en ce que l'on obtient les informations de commande pour la quantification des échantillons dans les bandes partielles, côté émission et côté réception, à partir des facteurs d'échelle des signaux de bandes partielles.

17. Procédé selon une des revendications 1, 8, 9 et 16, caractérisé en ce que l'on obtient les informations de commande pour la quantification des échantillons du côté émission seulement et on transmet ces informations en supplément pour la réquantification côté réception.

18. Procédé selon la revendication 17, caractérisé en ce que l'on obtient les informations de commande pour la quantification des échantillons, côté émission, selon une analyse spectrale sélectionnée du signal audio mumérique.

19. Procédé selon les revendications 1 et 12, caractérisé en ce que l'on soumet les facteurs d'échelle, avant leur transmission, à un contrôle d'erreurs plus sévère que les échantillons transcodés des signaux de bandes partielles.

20. Procédé selon les revendications 1, 17 et 18, caractérisé en ce que l'on soumet les informations de commande, avant leur transmission, à une protection contre les erreurs plus grande que les échantillons transcodés des signaux de bandes partielles.

21. Procédé selon les revendications 19 et 20, caractérisé en ce que la protection contre les erreurs des facteurs d'échelle et/ou des informations de commande est plus grande dans des bandes partielles de plus grande largeur de bande relative que dans des bandes partielles de plus petite largeur de bande relative.

22. Procédé selon la revendication 1, caractérisé en ce que l'on soumet les échantillons transcodés dans les bandes partielles à une protection contre les erreurs, de manière qu'il existe une plus grande protection contre les erreurs existe dans les bandes partielles de plus grande largeur de bande relative que dans les bandes partielles de plus petite largeur de bande relative.

23. Procédé selon une des revendications 1 et 19 à 22, caractérisé en ce que l'on adapte la quantité d'information pour la protection contre les erreurs (degré de protection contre les erreurs) selon la structure spectrale et temporelle du signal audio numérique

— en prévoyant un haut degré de protection contre les erreurs pour les signaux audio demandant un faible flux d'information total pour la transmission et

— en prévoyant un faible degré de protection contre les erreurs pour des signaux audio demandant un important flux d'information total pour la transmission.

24. Procédé selon la revendication 23, caractérisé en ce que l'on adapte le degré de protection contre les erreurs, dépendant des signaux, de manière que la perturbation subjective provoquée par des erreurs sur les bits ne soit pas plus grande pour des signaux audio peu masquants que pour des signaux audio fortement masquants.

25. Procédé selon la revendication 1, caractérisé en ce que, lorsque le niveau d'un signal de bande partielle descend au-dessous d'un seuil de niveau, on ne transcode pas les échantillons de ce signal.

26. Procédé selon une des revendications 4 à 6 et 12 à 16, caractérisé en ce que le facteur d'échelle d'une bande partielle contient l'information que les échantillons de cette bande partielle à l'intérieur d'un bloc sont nuls et ne sont pas transmis.

FIG. 1A

24

FIG. 1B

FIG. 1C

EP 0 290 581 B1

FIG. 1D

$q_{ta}$: Datenfluß der transkodierten Abtastwerte der Teilbänder

$q_{ta} + q_{sf} + q_{si}$ : Datenfluß der kodierten Teilbandsignale

27

EP 0 290 581 B1

D E M U L T I P L E X

24  (17)  24  inverse Trans-kodierung (12)

Fehlerkorrektur

24  (18)

192 kbit/s

(13)

dynamische Verteilung des Informations-flusses (15)

24  Trans-kodierung (2)  24  (7)  24

Fehlersicherung

24  (8)  24

Skalenfaktoren

dynamische Verteilung des Informations-flusses (5)

24

Steuer-information

M U L T I P L E X

(3)

128 kbit/s

Qualität 1 ◄——  ——► Qualität 2

28

FIG. 1E

FIG. 2A

FIG. 2B

FIG. 2C

FIG. 2D

**Qualitätsstufe**

⑥

④

Skalenfaktoren

| spektrale Mithörschwellen | zeitliche Mithörschwellen | Berücksichtigung des Mask/Noise-Abstandes |
| 5.1 | 5.2 | 5.5 |

| Qualitätsstufen-spezifische Kriterien | Zuweisung der Auflösungen |
| 5.6 | 5.3 |

②

| Berücksichtigung Aliasing-Verzerrungen |
| 5.4 |

⑤

FIG. 3

FIG. 5

FIG. 4

FIG. 6

FIG. 7

FIG. 8

EP 0 290 581 B1

FIG. 9

FIG. 10

FIG. 11

**Betrag**

**Abtastwerte**

$s_n$    $s_{n+1}$    $s_{n+2}$    $s_{n+3}$

FIG. 12

**Betrag**

**Abtast-werte**

$s_n$    $b_n$    $s_{n+1}$    $b_{n+1}$    $s_{n+2}$    $b_{n+2}$    $s_{n+3}$    $b_{n+3}$

FIG. 13

FIG. 14

EP 0 290 581 B1

FIG. 15

EP 0 290 581 B1

FIG. 16